(19) Europäisches Patentamt
European Patent Office
Office européen des brevets

(11) **EP 4 757 226 A1**

(12) **EUROPEAN PATENT APPLICATION**
published in accordance with Art. 153(4) EPC

(43) Date of publication:
**10.06.2026 Bulletin 2026/24**

(21) Application number: **24858266.0**

(22) Date of filing: **09.08.2024**

(51) International Patent Classification (IPC):
***H04L 5/00*** (2006.01)

(52) Cooperative Patent Classification (CPC):
**H04B 7/0456; H04B 7/06; H04L 5/00**

(86) International application number:
**PCT/CN2024/110891**

(87) International publication number:
**WO 2025/044723 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.08.2023 CN 202311096172**

(71) Applicant: **HUAWEI TECHNOLOGIES CO., LTD.
Shenzhen 518129 (CN)**

(72) Inventors:
• **CAI, Shijie
Shenzhen, Guangdong 518129 (CN)**
• **LIAN, Jin
Shenzhen, Guangdong 518129 (CN)**
• **LIU, Kunpeng
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND RELATED DEVICE**

(57) This application provides a communication method and a related device. In the method, a first reference signal sent by a first communication apparatus is for determining first channel information corresponding to K ports in N ports of the first communication apparatus, and the first channel information is for determining second channel information corresponding to the N ports. In other words, after a receiver of the first reference signal can determine, based on reference signals corresponding to the K ports, the first channel information corresponding to the K ports, the receiver can further determine the channel information corresponding to the N ports, where K is less than N. Therefore, channel information can be determined by the first communication apparatus sending reference signals corresponding to a part of ports, so that reference signal overheads can be reduced, and reference signals can be transmitted by using fewer resources, thereby improving resource utilization and improving network throughput performance.

FIG. 3

## Description

This application claims priority to Chinese Patent Application No. 202311096172.9, filed with the China National Intellectual Property Administration on August 28, 2023, and entitled "COMMUNICATION METHOD AND RELATED DEVICE", which is incorporated herein by reference in its entirety.

## TECHNICAL FIELD

This application relates to the field of wireless communication technologies, and in particular, to a communication method and a related device.

## BACKGROUND

Currently, as a key technology in wireless communication, a multi-input multi-output (multi-input multi-output, MIMO) technology can be used for satisfying a high-speed transmission requirement. A communication process between a network device and a terminal device is used as an example. The network device performs channel measurement by using a reference signal to obtain channel information. The channel measurement may also be understood as channel estimation. Then, the network device may compute precoding information between the network device and the terminal device based on the channel information, and subsequently, the network device and the terminal device may implement MIMO communication based on the precoding information.

A channel measurement process implemented by the network device based on an uplink reference signal is used as an example. The uplink reference signal sent by the terminal device may be a sounding reference signal (sounding reference signal, SRS). The network device may receive the SRS and perform channel measurement based on the SRS, to obtain channel information. The SRS is sent through a port of the terminal device, and overheads of the SRS are related to a quantity of ports of the terminal device.

However, in a MIMO system, a quantity of ports of a terminal device is likely to increase gradually, driven by rising frequency bands and a growing demand for high-rate communication. Consequently, overheads of a reference signal (for example, an SRS) that is for channel measurement increase, and more transmission resources are occupied, thereby affecting network throughput performance.

## SUMMARY

This application provides a communication method and a related device, to transmit a reference signal by using fewer resources, thereby improving resource utilization and improving network throughput performance.

A first aspect of this application provides a communication method. The method may be performed by a first communication apparatus, and the first communication apparatus may be a terminal device or a network device. Alternatively, the method may be performed by a part of components (for example, a processor, a chip, or a chip system) in the first communication apparatus, or the method may be implemented by a logical module or software that can implement all or some functions of the first communication apparatus. In the first aspect and a possible implementation of the first aspect, an example in which the communication method is performed by the first communication apparatus is used for description. In the method, the first communication apparatus determines K reference signal ports corresponding to a first reference signal, where K is a positive integer, the first reference signal is for determining first channel information, the first channel information is channel information corresponding to K ports in N ports of the first communication apparatus, the first channel information is for determining second channel information, the second channel information is channel information corresponding to the N ports, N is a positive integer greater than K, and the K reference signal ports satisfy one or more of the following: the K reference signal ports correspond to K rows, K columns, or K indexes in a spatial domain basis of the first communication apparatus; the K reference signal ports correspond to K antenna indexes in N antenna indexes, where the N antenna indexes are associated with the N ports; and the K reference signal ports correspond to indexes of channel information of the K ports in channel information of the N ports included in third channel information, where the third channel information is obtained based on a second reference signal; and the first communication apparatus sends the first reference signal.

Based on the foregoing technical solution, the first reference signal sent by the first communication apparatus is for determining the first channel information corresponding to the K ports in the N ports of the first communication apparatus, and the first channel information is for determining the second channel information corresponding to the N ports. The K reference signal ports satisfy one or more of the foregoing items. In other words, after a receiver of the first reference signal can determine, based on reference signals corresponding to the K ports, the first channel information corresponding to the K ports, the receiver can further determine, based on one or more of the foregoing items, the channel information corresponding to the N ports, where K is less than N. Therefore, channel information can be determined by the first communication apparatus sending reference signals corresponding to a part of ports, so that reference signal overheads can be reduced, and reference signals can be transmitted by using fewer resources, thereby improving resource utilization and improving network throughput performance.

It should be understood that a resource carrying the K reference signal ports may be determined through configuration. An example in which the first communication apparatus is a terminal device and a second communication apparatus is a network device is used. The first communication apparatus may receive configuration information from a network device (for example, the network device is the second communication apparatus). The configuration information is for configuring a resource of a reference signal resource set (resource set). The reference signal resource set may include the K reference signal ports, so that the first communication apparatus can send, in step S301 based on the resource configured by using the configuration information, the first reference signal corresponding to K reference signal ports. Similarly, for another reference signal (for example, a second reference signal and a second reference signal) mentioned below, a resource carrying the another reference signal may also be determined through configuration. For example, the another reference signal includes a channel state information reference signal (channel state information reference signal, CSI-RS). Resource configuration may be performed on the CSI-RS at a plurality of granularities such as a resource configuration (resourceConfig), a resource set (resourceSet), and a resource (resource) by using CSI-RS configuration information received by the first communication apparatus.

It should be understood that the second channel information is the channel information corresponding to the N ports. It may be understood as that the second channel information may include channel information of all of the N ports. Therefore, a matrix representation of the second channel information may include N rows of information (or N columns of information), where the N rows of information (or the N columns of information) respectively correspond to the channel information of all of the N ports.

It should be understood that the first reference signal corresponding to the K reference signal ports is for determining the second channel information corresponding to the K ports in the N ports. In other words, the K reference signal ports correspond to the K ports in the N ports. To be specific, the K reference signal ports correspond to indexes of the K ports in the N ports. In other words, the first reference signal corresponding to the K reference signal ports may be for determining the channel information corresponding to the K ports. Therefore, in one or more of the foregoing items, the K reference signal ports may be replaced with the indexes of the K ports in the N ports, that is, the indexes of the K ports in the N ports satisfy one or more of the foregoing items.

In addition, the second channel information may be the channel information corresponding to the N ports. The K reference signal ports correspond to the indexes of the K ports in the N ports. To be specific, the first channel information determined based on the first reference signal corresponding to the K reference signal ports may be for determining the channel information corresponding to the K ports in the N ports in the second channel information. Therefore, in an implementation process of the foregoing one or more items, the receiver (for example, the second communication apparatus) of the first channel information can accurately learn of, based on the first channel information, the channel information corresponding to the K ports in the N ports in the second channel information.

Optionally, a value of N is a total quantity of physical antennas, a total quantity of physical ports, or a total quantity of virtual ports of the first communication apparatus, or a quantity of ports indicated by first capability information, where the first capability information indicates a quantity of ports of the first communication apparatus. For example, the first capability information may be capability information sent by the first communication apparatus, or capability information indicated by a scheduling device (for example, a controller, a server, or a network device) of the first communication apparatus. This is not limited herein.

In an implementation example, the first communication apparatus may be a terminal device, and the second communication apparatus may be a network device. In this case, the second reference signal may be a channel state information reference signal (channel state information reference signal, CSI-RS), the first reference signal may be an SRS, and the third channel information and the third channel information may be precoding matrix indicators (precoding matrix indicator, PMI).

In another implementation example, the first communication apparatus may be a network device, and the second communication apparatus may be a terminal device. In this case, the second reference signal includes an SRS, the first reference signal is a CSI-RS, and the third channel information and the third channel information include a transmitted precoding matrix indicator (transmitted precoding matrix indicator, T-PMI).

Optionally, the spatial domain basis includes a discrete Fourier transform (discrete fourier transform, DFT) basis and/or an eigenbasis. The eigenbasis may be replaced with an adaptive basis, an adaptive eigenbasis, or the like.

In a possible implementation of the first aspect, the method further includes: The first communication apparatus sends or receives first indication information, where the first indication information indicates the one or more items.

Based on the foregoing technical solution, the first communication apparatus may send the first indication information to the second communication apparatus, or the first communication apparatus may receive the first indication information from the second communication apparatus, where the first indication information indicates the one or more items, so that both communication parties can reach a consensus understanding of the one or more items, thereby improving accuracy of determining the second channel information based on the first channel information.

In a possible implementation of the first aspect, the one or more items are preconfigured or predefined.

Based on the foregoing technical solution, the foregoing one or more items may be preconfigured or predefined, so that overheads can be reduced, and implementation complexity can be reduced.

In a possible implementation of the first aspect, the second reference signal corresponds to P reference signal ports, where P is a positive integer. The method further includes: The first communication apparatus sends the third channel information, where the third channel information is obtained based on the second reference signal, the third channel information is channel information corresponding to P ports in M ports, the third channel information is for determining the second channel information, and the second channel information is channel information corresponding to the N ports and the M ports.

Based on the foregoing technical solution, the first communication apparatus may further receive the second reference signal corresponding to the P reference signal ports. Then, the first communication apparatus may send the third channel information obtained based on the second reference signal. The third channel information is the channel information corresponding to the P ports in the M ports, and the third channel information and the first channel information are for determining the second channel information. Therefore, in a manner of performing joint channel measurement on reference signals sent by both communication parties to determine channel information, measurement overheads of a reference signal can be decoupled from a quantity of ports of a communication apparatus, thereby further reducing reference signal overheads and further improving network throughput performance.

It should be understood that the second channel information is the channel information corresponding to the N ports and the M ports. Because channels have reciprocity, information about channels between the M ports and the N ports is similar to (or the same as, or approximately the same as) information about channels between the N ports and the M ports. Therefore, the second channel information may be understood as the channel information corresponding to the N ports and the M ports, or the second channel information may be understood as the information about the channels between the N ports and the M ports.

It should be understood that, that the second channel information is the channel information corresponding to the N ports and the M ports may be understood in a plurality of manners.

In a possible solution, the second channel information may include information about channels between each of the M ports and the N ports. Therefore, the matrix representation of the second channel information may include M rows of information (or M columns of information), where the M rows of information (or the M columns of information) respectively correspond to the information about the channels between each of the M ports and the N ports.

In another possible solution, the second channel information may include information about channels between each of the N ports and the M ports. Therefore, the matrix representation of the second channel information may include N rows of information (or N columns of information), where the N rows of information (or the N columns of information) respectively correspond to the information about the channels between each of the N ports and the M ports.

Optionally, the second reference signal and the second reference signal received by the first communication apparatus are from the second communication apparatus. The second reference signal and the second reference signal may be a same reference signal, or may be different reference signals. This is not limited herein.

In a possible implementation of the first aspect, the P reference signal ports correspond to indexes of the P ports in the M ports.

Based on the foregoing technical solution, the second channel information may be the channel information corresponding to the N ports and the M ports. The P reference signal ports correspond to the indexes of the P ports in the M ports. To be specific, the third channel information determined based on the second reference signal may be for determining the channel information corresponding to the P ports in the M ports in the second channel information. Therefore, in an index correspondence manner, a receiver of the third channel information can accurately learn of, based on the third channel information, the channel information corresponding to the P ports in the M ports in the second channel information.

In a possible implementation of the first aspect, the method further includes: The first communication apparatus receives or sends second indication information, where the second indication information indicates the indexes of the P ports in the M ports.

Based on the foregoing technical solution, the first communication apparatus may send the second indication information to the second communication apparatus, or the first communication apparatus may receive the second indication information from the second communication apparatus, where the second indication information indicates the indexes of the P ports in the M ports, so that both communication parties can reach a consensus understanding of the one or more items, thereby improving accuracy of determining the second channel information based on the third channel information.

Optionally, the second indication information is preconfigured or predefined.

Optionally, the receiver of the third channel information and the receiver of the first reference signal may be the second communication apparatus, a value of M may be a total quantity of physical antennas, a total quantity of physical ports, or a total quantity of virtual ports of the second communication apparatus, or a quantity of ports indicated by second capability information, where the second capability information indicates a quantity of ports of the second communication apparatus. For example, the second capability information may be capability information sent by the second communication apparatus, or capability information indicated by a scheduling device (for example, a controller, a server, or a network device) of the second communication apparatus. This is not limited herein.

In a possible implementation of the first aspect, the first reference signal is carried on a first time domain resource, the second reference signal is carried on a second time domain resource, and the third channel information is carried on a third time domain resource. The first time-frequency resource satisfies at least one of the following:

a time interval between the first time domain resource and the second time domain resource is less than or equal to X time units, where X is a positive number;
a time interval between the first time domain resource and the third time domain resource is less than or equal to Y time units, where Y is a positive number;
the first time domain resource and the second time domain resource are located in a same time unit; and
the first time domain resource and the third time domain resource are located in a same time unit.

Optionally, that a signal/a piece of information is carried on a time domain resource (for example, the first reference signal is carried on the first time domain resource, the second reference signal is carried on the second time domain resource, or the third channel information is carried on the third time domain resource) may be understood as that the signal/information occupies the time domain resource, or a resource occupied by the signal/information in time domain is the time domain resource.

In this application, the time unit may include a symbol (for example, an orthogonal frequency division multiplexing (orthogonal frequency division multiplexing, OFDM) symbol), a slot (slot), a sub-frame (sub-frame), a frame (frame), and the like. This is not limited herein.

Based on the foregoing technical solution, the first time domain resource for carrying the first reference signal and the third time domain resource for carrying the third channel information, and/or the first time domain resource for carrying the first reference signal and the second time domain resource for carrying the second reference signal satisfy at least one of the foregoing items, so that the first time domain resource and the second time domain resource can be as close as possible, and/or the first time domain resource and the third time domain resource can be as close as possible. The first reference signal is for determining the first channel information between the first communication apparatus and the receiver (for example, the second communication apparatus) of the first reference signal, and the second reference signal is for determining the third channel information between a transmitter (for example, the second communication apparatus) of the second reference signal and the first communication apparatus. When at least one of the foregoing items is satisfied, channel conditions corresponding to the two pieces of channel information can be reciprocal as much as possible, thereby improving a matching degree between the second channel information determined based on the first channel information and the third channel information and the channel conditions.

A second aspect of this application provides a communication method. The method may be performed by a second communication apparatus, and the second communication apparatus may be a terminal device or a network device. Alternatively, the method may be performed by a part of components (for example, a processor, a chip, or a chip system) in the second communication apparatus, or the method may be implemented by a logical module or software that can implement all or some functions of the second communication apparatus. In the second aspect and a possible implementation of the second aspect, an example in which the communication method is performed by the second communication apparatus is used for description. In the method, the second communication apparatus receives a first reference signal, where the first reference signal corresponds to K reference signal ports, and K is a positive integer. The second communication apparatus determines first channel information based on the first reference signal, where the first channel information is channel information corresponding to K ports in N ports of a first communication apparatus, the first channel information is for determining second channel information, the second channel information is channel information corresponding to the N ports, N is a positive integer greater than K, and the K reference signal ports satisfy one or more of the following: the K reference signal ports correspond to K rows, K columns, or K indexes in a spatial domain basis of the first communication apparatus; the K reference signal ports correspond to K antenna indexes in N antenna indexes, where the N antenna indexes are associated with the N ports; and the K reference signal ports correspond to indexes of channel information of the K ports in channel information of the N ports included in third channel information, where the third channel information is obtained based on a second reference signal.

Based on the foregoing technical solution, the first reference signal received by the second communication apparatus is for determining the first channel information corresponding to the K ports in the N ports of the first communication apparatus, and the first channel information is for determining the second channel information corresponding to the N ports. The K reference signal ports satisfy one or more of the foregoing items. In other words, after the second communication apparatus determines, based on reference signals corresponding to the K ports, the first channel information corresponding to the K ports, the second communication apparatus can further determine, based on one or more of the foregoing items, the channel information corresponding to the N ports, where K is less than N. Therefore, channel information can be determined by the first communication apparatus sending reference signals corresponding to a part of ports, so that reference signal overheads can be reduced, and reference signals can be transmitted by using fewer resources, thereby improving resource utilization and improving network throughput performance.

It should be understood that the second channel information is the channel information corresponding to the N ports. It may be understood as that the second channel information may include channel information of all of the N ports. Therefore, a matrix representation of the second channel information may include N rows of information (or N columns of information), where the N rows of information (or the N columns of information) respectively correspond to the channel information of all of the N ports.

It should be understood that the first reference signal corresponding to the K reference signal ports is for determining the second channel information corresponding to the K ports in the N ports. In other words, the K reference signal ports correspond to the K ports in the N ports. To be specific, the K reference signal ports correspond to indexes of the K ports in the N ports. In other words, the first reference signal corresponding to the K reference signal ports may be for determining the channel information corresponding to the K ports. Therefore, in one or more of the foregoing items, the K reference signal ports may be replaced with the indexes of the K ports in the N ports, that is, the indexes of the K ports in the N ports satisfy one or more of the foregoing items.

In addition, the second channel information may be the channel information corresponding to the N ports. The K reference signal ports correspond to the indexes of the K ports in the N ports. To be specific, the first channel information determined based on the first reference signal may be for determining the channel information corresponding to the K ports in the N ports in the second channel information. Therefore, in an implementation process of the foregoing one or more items, the second communication apparatus can accurately learn of, based on the first channel information, the channel information corresponding to the K ports in the N ports in the second channel information.

Optionally, a value of N is a total quantity of physical antennas, a total quantity of physical ports, or a total quantity of virtual ports of the first communication apparatus, or a quantity of ports indicated by first capability information, where the first capability information indicates a quantity of ports of the first communication apparatus. For example, the first capability information may be capability information sent by the first communication apparatus, or capability information indicated by a scheduling device (for example, a controller, a server, or a network device) of the first communication apparatus. This is not limited herein.

In an implementation example, the first communication apparatus may be a terminal device, and the second communication apparatus may be a network device. In this case, the second reference signal may be a CSI-RS, the first reference signal may be an SRS, and the third channel information and the third channel information include a PMI.

In another implementation example, the first communication apparatus may be a network device, and the second communication apparatus may be a terminal device. In this case, the second reference signal includes an SRS, the first reference signal is a CSI-RS, and the third channel information and the third channel information include a T-PMI.

Optionally, the spatial domain basis includes a DFT basis and/or an eigenbasis. The eigenbasis may be replaced with an adaptive basis, an adaptive eigenbasis, or the like.

In a possible implementation of the second aspect, the method further includes: The second communication apparatus sends or receives first indication information, where the first indication information indicates the one or more items.

Based on the foregoing technical solution, the second communication apparatus may send the first indication information to the first communication apparatus, or the second communication apparatus may receive the first indication information from the first communication apparatus, where the first indication information indicates the one or more items, so that both communication parties can reach a consensus understanding of the one or more items, thereby improving accuracy of determining the second channel information by the second communication apparatus based on the first channel information.

In a possible implementation of the second aspect, the one or more items are preconfigured or predefined.

Based on the foregoing technical solution, the foregoing one or more items may be preconfigured or predefined, so that overheads can be reduced, and implementation complexity can be reduced.

In a possible implementation of the second aspect, the second reference signal corresponds to P reference signal ports, where P is a positive integer. The method further includes: The second communication apparatus receives third channel information, where the third channel information is channel information corresponding to P ports in M ports, the third channel information is for determining the second channel information, and the second channel information is channel information corresponding to the N ports and the M ports.

Based on the foregoing technical solution, the second communication apparatus may further send the second reference signal corresponding to the P reference signal ports. Then, the second communication apparatus may receive the third channel information obtained based on the second reference signal. The third channel information is the channel information corresponding to the P ports in the M ports, and the third channel information and the first channel information are for determining the second channel information. Therefore, in a manner of performing joint channel measurement on reference signals sent by both communication parties to determine channel information, measurement overheads of a reference signal can be decoupled from a quantity of ports of a communication apparatus, thereby further reducing reference signal overheads and further improving network throughput performance.

It should be understood that the second channel information is the channel information corresponding to the N ports and the M ports. Because channels have reciprocity, information about channels between the M ports and the N ports is similar to (or the same as, or approximately the same as) information about channels between the N ports and the M ports. Therefore, the second channel information may be understood as the channel information corresponding to the N ports and the M ports, or the second channel information may be understood as the information about the channels between the N ports and the M ports.

It should be understood that, that the second channel information is the channel information corresponding to the N ports and the M ports may be understood in a plurality of manners.

In a possible solution, the second channel information may include information about channels between each of the M ports and the N ports. Therefore, the matrix representation of the second channel information may include M rows of information (or M columns of information), where the M rows of information (or the M columns of information) respectively correspond to the information about the channels between each of the M ports and the N ports.

In another possible solution, the second channel information may include information about channels between each of the N ports and the M ports. Therefore, the matrix representation of the second channel information may include N rows of information (or N columns of information), where the N rows of information (or the N columns of information) respectively correspond to the information about the channels between each of the N ports and the M ports.

Optionally, the second reference signal and the second reference signal received by the first communication apparatus are from the second communication apparatus. The second reference signal and the second reference signal may be a same reference signal, or may be different reference signals. This is not limited herein.

In a possible implementation of the second aspect, the P reference signal ports correspond to indexes of the P ports in the M ports.

Based on the foregoing technical solution, the second channel information may be the channel information corresponding to the N ports and the M ports. The P reference signal ports correspond to the indexes of the P ports in the M ports. To be specific, the third channel information determined based on the second reference signal may be for determining the channel information corresponding to the P ports in the M ports in the second channel information. Therefore, in an index correspondence manner, the second communication apparatus can accurately learn of, based on the third channel information, the channel information corresponding to the P ports in the M ports in the second channel information.

In a possible implementation of the second aspect, the method further includes: The second communication apparatus receives or sends second indication information, where the second indication information indicates the indexes of the P ports in the M ports.

Based on the foregoing technical solution, the second communication apparatus may send the second indication information to the first communication apparatus, or the second communication apparatus may receive the second indication information from the first communication apparatus, where the second indication information indicates the indexes of the P ports in the M ports, so that both communication parties can reach a consensus understanding of the one or more items, thereby improving accuracy of determining the second channel information by the second communication apparatus based on the third channel information.

Optionally, the second indication information is preconfigured or predefined.

Optionally, a value of M may be a total quantity of physical antennas, a total quantity of physical ports, or a total quantity of virtual ports of the second communication apparatus, or a quantity of ports indicated by second capability information, where the second capability information indicates a quantity of ports of the second communication apparatus. For example, the second capability information may be capability information sent by the second communication apparatus, or capability information indicated by a scheduling device (for example, a controller, a server, or a network device) of the second communication apparatus. This is not limited herein.

In a possible implementation of the second aspect, the second reference signal is carried on a first time domain resource, the third channel information is carried on a second time domain resource, and the first reference signal is carried on a third time domain resource. The first time-frequency resource satisfies at least one of the following: a time interval between the first time domain resource and the third time domain resource is less than or equal to X time units, where X is a positive number; a time interval between the second time domain resource and the third time domain resource is less than or equal to Y time units, where Y is a positive number; the first time domain resource and the third time domain resource are located in a same time unit; and the second time domain resource and the third time domain resource are located in a same time unit.

Optionally, that a signal/a piece of information is carried on a time domain resource (for example, the first reference signal is carried on the first time domain resource, the second reference signal is carried on the second time domain resource, or the third channel information is carried on the third time domain resource) may be understood as that the signal/information occupies the time domain resource, or a resource occupied by the signal/information in time domain is the time domain resource.

Based on the foregoing technical solution, the first time domain resource for carrying the first reference signal and the third time domain resource for carrying the third channel information, and/or the first time domain resource for carrying the first reference signal and the second time domain resource for carrying the second reference signal satisfy at least one of the foregoing items, so that the first time domain resource and the second time domain resource can be as close as possible, and/or the first time domain resource and the third time domain resource can be as close as possible. The first reference signal is for determining the first channel information between the first communication apparatus and the second communication apparatus, and the second reference signal is for determining the third channel information between the second communication apparatus and the first communication apparatus. When at least one of the foregoing items is satisfied, channel conditions corresponding to the two pieces of channel information can be reciprocal as much as possible, thereby improving a matching degree between the second channel information determined based on the first channel information and the third channel information and the channel conditions.

A third aspect of this application provides a communication method. The method may be performed by a first communication apparatus, and the first communication apparatus may be a terminal device or a network device. Alternatively, the method may be performed by a part of components (for example, a processor, a chip, or a chip system) in the first communication apparatus, or the method may be implemented by a logical module or software that can implement all or some functions of the first communication apparatus. In the third aspect and a possible implementation of the third aspect, an example in which the communication method is performed by the first communication apparatus is used for description. In the method, a first communication apparatus sends a first reference signal, where the first reference signal is for determining first channel information, and the first reference signal is carried on a first time domain resource. The first communication apparatus receives a second reference signal, where the second reference signal is carried on a second time domain resource. The first communication apparatus sends third channel information, where the third channel information is obtained based on the second reference signal, the third channel information is carried on a third time domain resource, and the third channel information and the first channel information are for determining channel information between a first communication apparatus and a second communication apparatus, where the first time-frequency resource satisfies at least one of the following: a time interval between the first time domain resource and the second time domain resource is less than or equal to X time units, where X is a positive integer; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

Based on the foregoing technical solution, the first reference signal sent by the first communication apparatus may be for determining the first channel information, and the second reference signal received by the first communication apparatus may be for determining the third channel information. Subsequently, a receiver (for example, the second communication apparatus) of the first reference signal and the third channel information may further determine the second channel information between the first communication apparatus and the second communication apparatus based on the first channel information and the third channel information. In addition, the first time domain resource for carrying the first reference signal and the third time domain resource for carrying the third channel information, and/or the first time domain resource for carrying the first reference signal and the second time domain resource for carrying the second reference signal satisfy at least one of the foregoing items, so that the first time domain resource and the second time domain resource can be as close as possible, and/or the first time domain resource and the third time domain resource can be as close as possible. The first reference signal is for determining the first channel information between the first communication apparatus and the receiver (for example, the second communication apparatus) of the first reference signal, and the second reference signal is for determining the third channel information between a transmitter (for example, the second communication apparatus) of the second reference signal and the first communication apparatus. When at least one of the foregoing items is satisfied, channel conditions corresponding to the two pieces of channel information can be reciprocal as much as possible, thereby improving a matching degree between the second channel information determined based on the first channel information and the third channel information and the channel conditions.

In addition, in a manner of performing joint channel measurement on reference signals sent by both communication parties to determine channel information, measurement overheads of a reference signal can be decoupled from a quantity of ports of a communication apparatus, so that reference signal overheads can be reduced, and a reference signal is transmitted by using fewer resources, thereby improving resource utilization and improving network throughput performance.

In an implementation example, the first communication apparatus may be a terminal device, and the second communication apparatus may be a network device. In this case, the second reference signal may be a CSI-RS, the first reference signal may be an SRS, and the third channel information may include a PMI.

In another implementation example, the first communication apparatus may be a network device, and the second communication apparatus may be a terminal device. In this case, the second reference signal includes an SRS, the first reference signal is a CSI-RS, and the third channel information includes a T-PMI.

A fourth aspect of this application provides a communication method. The method may be performed by a second communication apparatus, and the first communication apparatus may be a terminal device or a network device. Alternatively, the method may be performed by a part of components (for example, a processor, a chip, or a chip system) in the second communication apparatus, or the method may be implemented by a logical module or software that can implement all or some functions of the second communication apparatus. In the fourth aspect and a possible implementation of the fourth aspect, an example in which the communication method is performed by the second communication apparatus is used for description. In the method, the second communication apparatus receives a first reference signal, where the first reference signal is for determining first channel information, and the first reference signal is carried on a first time domain resource. The second communication apparatus sends a second reference signal, where the second reference signal is carried on a second time domain resource. The second communication apparatus receives third channel information, where the third channel information is obtained based on the second reference signal, the third channel information is carried on a third time domain resource, and the third channel information and the first channel information are for determining channel information between a first communication apparatus and the second communication apparatus, where the first time-frequency resource satisfies at least one of the following: a time interval between the first time domain resource and the second time domain resource is less than or equal to X time units, where X is a positive integer; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

Based on the foregoing technical solution, the first reference signal received by the second communication apparatus may be for determining the first channel information, and the second reference signal sent by the second communication apparatus may be for determining the third channel information. Subsequently, the second communication apparatus may further determine the second channel information between the first communication apparatus and the second communication apparatus based on the first channel information and the third channel information. In addition, the first time domain resource for carrying the first reference signal and the third time domain resource for carrying the third channel information, and/or the first time domain resource for carrying the first reference signal and the second time domain resource for carrying the second reference signal satisfy at least one of the foregoing items, so that the first time domain resource and the second time domain resource can be as close as possible, and/or the first time domain resource and the third time domain resource can be as close as possible. The first reference signal is for determining the first channel information between the first communication apparatus and the second communication apparatus, and the second reference signal is for determining the third channel information between the second communication apparatus and the first communication apparatus. When at least one of the foregoing items is satisfied, channel conditions corresponding to the two pieces of channel information can be reciprocal as much as possible, thereby improving a matching degree between the second channel information determined based on the first channel information and the third channel information and the channel conditions.

In an implementation example, the first communication apparatus may be a terminal device, and the second communication apparatus may be a network device. In this case, the second reference signal may be a CSI-RS, the first reference signal may be an SRS, and the third channel information may include a PMI.

In another implementation example, the first communication apparatus may be a network device, and the second communication apparatus may be a terminal device. In this case, the second reference signal includes an SRS, the first reference signal is a CSI-RS, and the third channel information includes a T-PMI.

A fifth aspect of this application provides a communication apparatus. The apparatus is a first communication apparatus, the apparatus is a part of components (such as a processor, a chip, or a chip system) in the first communication apparatus, or the apparatus is a logical module or software that can implement all or some functions of the first communication apparatus. In the fifth aspect and a possible implementation of the fifth aspect, an example in which the communication apparatus is the first communication apparatus is used for description.

The apparatus includes a transceiver unit and a processing unit. The processing unit is configured to determine K reference signal ports corresponding to a first reference signal, where K is a positive integer, the first reference signal is for determining first channel information, the first channel information is channel information corresponding to K ports in N ports of a first communication apparatus, the first channel information is for determining second channel information, the second channel information is channel information corresponding to the N ports, N is a positive integer greater than K, and the K reference signal ports satisfy one or more of the following: the K reference signal ports correspond to K rows, K columns, or K indexes in a spatial domain basis of the first communication apparatus; the K reference signal ports correspond to K antenna indexes in N antenna indexes, where the N antenna indexes are associated with the N ports; and the K reference signal ports correspond to indexes of channel information of the K ports in channel information of the N ports included in third channel information, where the third channel information is obtained based on a second reference signal. The transceiver unit is configured to send the first reference signal.

In a possible implementation of the fifth aspect, the spatial domain basis includes a discrete Fourier transform DFT basis and/or an eigenbasis.

In a possible implementation of the fifth aspect, the transceiver unit is further configured to send or receive first indication information, where the first indication information indicates the one or more items.

In a possible implementation of the fifth aspect, the one or more items are preconfigured or predefined.

In a possible implementation of the fifth aspect, a value of N is a total quantity of physical antennas of the first communication apparatus, a total quantity of physical ports of the first communication apparatus, a total quantity of virtual ports of the first communication apparatus, or a quantity of ports indicated by first capability information, where the first capability information indicates a quantity of ports of the first communication apparatus.

In a possible implementation of the fifth aspect, the second reference signal corresponds to P reference signal ports, where P is a positive integer. The transceiver unit is further configured to send third channel information, where the third channel information is channel information corresponding to P ports in M ports, the third channel information is for determining the second channel information, and the second channel information is channel information corresponding to the N ports and the M ports.

In a possible implementation of the fifth aspect, the P reference signal ports correspond to indexes of the P ports in the M ports.

In a possible implementation of the fifth aspect, the transceiver unit is further configured to receive or send second indication information, where the second indication information indicates the indexes of the P ports in the M ports.

In a possible implementation of the fifth aspect, a value of M is a total quantity of physical antennas, a total quantity of physical ports, or a total quantity of virtual ports of the second communication apparatus, or a quantity of ports indicated by second capability information, where the second capability information indicates a quantity of ports of the second communication apparatus.

In a possible implementation of the fifth aspect, the first reference signal is carried on a first time domain resource, the second reference signal is carried on a second time domain resource, and the third channel information is carried on a third time domain resource. The first time-frequency resource satisfies at least one of the following: a time interval between the first time domain resource and the second time domain resource is less than or equal to X time units, where X is a positive number; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

In a possible implementation of the fifth aspect, the second reference signal is a channel state information reference signal CSI-RS, the first reference signal is a sounding reference signal SRS, and the third channel information and the third channel information include a precoding matrix indicator PMI; or the second reference signal is an SRS, the first reference signal is a CSI-RS, and the third channel information and the third channel information include a transmitted precoding matrix indicator T-PMI.

In the fifth aspect of this application, a composition module of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus is a second communication apparatus, the apparatus is a part of components (such as a processor, a chip, or a chip system) in the second communication apparatus, or the apparatus is a logical module or software that can implement all or some functions of the second communication apparatus. In the sixth aspect and a possible implementation of the sixth aspect, an example in which the communication apparatus is the second communication apparatus is used for description.

The apparatus includes a transceiver unit and a processing unit. The transceiver unit is configured to receive a first reference signal, where the first reference signal corresponds to K reference signal ports, and K is a positive integer. The processing unit is configured to determine first channel information based on the first reference signal, where the first channel information is channel information corresponding to K ports in N ports of a first communication apparatus, the first channel information is for determining second channel information, the second channel information is channel information corresponding to the N ports, N is a positive integer greater than K, and the K reference signal ports satisfy one or more of the following: the K reference signal ports correspond to K rows, K columns, or K indexes in a spatial domain basis of the first communication apparatus; the K reference signal ports correspond to K antenna indexes in N antenna indexes, where the N antenna indexes are associated with the N ports; and the K reference signal ports correspond to indexes of channel information of the K ports in channel information of the N ports included in third channel information, where the third channel information is obtained based on a second reference signal.

In a possible implementation of the sixth aspect, the spatial domain basis includes a discrete Fourier transform DFT basis and/or an eigenbasis.

In a possible implementation of the sixth aspect, the transceiver unit is further configured to send or receive first indication information, where the first indication information indicates the one or more items.

In a possible implementation of the sixth aspect, the one or more items are preconfigured or predefined.

In a possible implementation of the sixth aspect, a value of N is a total quantity of physical antennas of the first communication apparatus, a total quantity of physical ports of the first communication apparatus, a total quantity of virtual ports of the first communication apparatus, or a quantity of ports indicated by first capability information, where the first capability information indicates a quantity of ports of the first communication apparatus.

In a possible implementation of the sixth aspect, the second reference signal corresponds to P reference signal ports, where P is a positive integer. The transceiver unit is further configured to receive third channel information, where the third channel information is obtained based on the second reference signal, the third channel information is channel information corresponding to P ports in M ports, the third channel information is for determining the second channel information, and the second channel information is channel information corresponding to the N ports and the M ports.

In a possible implementation of the sixth aspect, the P reference signal ports correspond to indexes of the P ports in the M ports.

In a possible implementation of the sixth aspect, the transceiver unit is further configured to receive or send second indication information, where the second indication information indicates the indexes of the P ports in the M ports.

In a possible implementation of the sixth aspect, a value of M is a total quantity of physical antennas, a total quantity of physical ports, or a total quantity of virtual ports of the second communication apparatus, or a quantity of ports indicated by second capability information, where the second capability information indicates a quantity of ports of the second communication apparatus.

In a possible implementation of the sixth aspect, the second reference signal is carried on a first time domain resource, the third channel information is carried on a second time domain resource, and the first reference signal is carried on a third time domain resource. The first time-frequency resource satisfies at least one of the following: a time interval between the first time domain resource and the third time domain resource is less than or equal to X time units, where X is a positive number; a time interval between the second time domain resource and the third time domain resource is less than or equal to Y time units, where Y is a positive number; the first time domain resource and the third time domain resource are located in a same time unit; and the second time domain resource and the third time domain resource are located in a same time unit.

In a possible implementation of the sixth aspect, the second reference signal is a channel state information reference signal CSI-RS, the first reference signal is a sounding reference signal SRS, and the third channel information and the third channel information include a precoding matrix indicator PMI; or the second reference signal is an SRS, the first reference signal is a CSI-RS, and the third channel information and the third channel information include a transmitted precoding matrix indicator T-PMI.

In the sixth aspect of this application, a composition module of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus is a first communication apparatus, the apparatus is a part of components (such as a processor, a chip, or a chip system) in the first communication apparatus, or the apparatus is a logical module or software that can implement all or some functions of the first communication apparatus. In the seventh aspect and a possible implementation of the seventh aspect, an example in which the communication apparatus is the first communication apparatus is used for description.

The apparatus includes a transceiver unit and a processing unit. The processing unit is configured to determine K reference signal ports corresponding to a first reference signal, where the first reference signal is for determining first channel information, and the first reference signal is carried on a first time domain resource. The transceiver unit is further configured to receive a second reference signal, where the second reference signal is carried on a second time domain resource. The transceiver unit is further configured to send third channel information, where the third channel information is obtained based on the second reference signal, the third channel information is carried on a third time domain resource, and the third channel information and the first channel information are for determining channel information between a first communication apparatus and a second communication apparatus, where the first time-frequency resource satisfies at least one of the following: a time interval between the first time domain resource and the second time domain resource is less than or equal to X time units, where X is a positive integer; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

In a possible implementation of the seventh aspect, the second reference signal is a channel state information reference signal CSI-RS, the first reference signal is a sounding reference signal SRS, and the third channel information is a precoding matrix indicator PMI; or the second reference signal includes an SRS, the first reference signal is a CSI-RS, and the third channel information includes a transmitted precoding matrix indicator T-PMI.

In the seventh aspect of this application, a composition module of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus is a second communication apparatus, the apparatus is a part of components (such as a processor, a chip, or a chip system) in the second communication apparatus, or the apparatus is a logical module or software that can implement all or some functions of the second communication apparatus. In the sixth aspect and a possible implementation of the sixth aspect, an example in which the communication apparatus is the second communication apparatus is used for description.

The apparatus includes a transceiver unit and a processing unit. The transceiver unit is configured to receive a first reference signal, where the first reference signal is for determining first channel information, and the first reference signal is carried on a first time domain resource. The processing unit is configured to determine a second reference signal. The transceiver unit is further configured to send the second reference signal, where the second reference signal is carried on a second time domain resource. The transceiver unit is further configured to receive third channel information, where the third channel information is obtained based on the second reference signal, the third channel information is carried on a third time domain resource, and the third channel information and the first channel information are for determining channel information between a first communication apparatus and the second communication apparatus, where the first time-frequency resource satisfies at least one of the following: a time interval between the first time domain resource and the second time domain resource is less than or equal to X time units, where X is a positive integer; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

In a possible implementation of the eighth aspect, the second reference signal is a channel state information reference signal CSI-RS, the first reference signal is a sounding reference signal SRS, and the third channel information is a precoding matrix indicator PMI; or the second reference signal includes an SRS, the first reference signal is a CSI-RS, and the third channel information includes a transmitted precoding matrix indicator T-PMI.

In the eighth aspect of this application, a composition module of the communication apparatus may be further configured to perform the steps performed in the possible implementations of the fourth aspect, and achieve corresponding technical effects. For details, refer to the fourth aspect. Details are not described herein again.

A ninth aspect of this application provides a communication apparatus, including at least one processor. The at least one processor is coupled to a memory, and the memory is configured to store a program or instructions. The at least one processor is configured to execute the program or the instructions, so that the apparatus implements the method according to any possible implementation of any one of the first aspect to the fourth aspect.

A tenth aspect of embodiments of this application provides a communication apparatus, including at least one logic circuit and an input/output interface. The logic circuit is configured to perform the method according to any possible implementation of any one of the first aspect to the fourth aspect.

An eleventh aspect of embodiments of this application provides a communication system. The communication system includes the first communication apparatus and the second communication apparatus described above.

A twelfth aspect of embodiments of this application provides a computer-readable storage medium. The storage medium is configured to store one or more computer-executable instructions. When the computer-executable instructions are executed by a processor, the processor performs the method according to any possible implementation of any one of the first aspect to the fourth aspect.

A thirteenth aspect of embodiments of this application provides a computer program product (or referred to as a computer program). When the computer program in the computer program product is executed by a processor, the processor performs the method according to any possible implementation of any one of the first aspect to the fourth aspect.

A fourteenth aspect of embodiments of this application provides a chip system. The chip system includes at least one processor, configured to support a communication apparatus in implementing the method according to any possible implementation of any one of the first aspect to the fourth aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

For technical effects brought by any design in the fifth aspect to the fourteenth aspect, refer to the technical effects brought by different designs in the first aspect to the fourth aspect. Details are not described herein again.

## BRIEF DESCRIPTION OF DRAWINGS

FIG. 1 is a diagram of a communication system according to this application;
FIG. 2 is a diagram of a scenario of communication between a terminal device and a network device according to this application;
FIG. 3 is a schematic flowchart of a communication method according to this application;
FIG. 4a is a diagram of a graphical representation of multi-port channel information according to this application;
FIG. 4b is another diagram of a graphical representation of multi-port channel information according to this application;
FIG. 5 is a diagram of different signals/information in time domain according to this application;
FIG. 6 is another schematic flowchart of a communication method according to this application;
FIG. 7 is a diagram of a communication apparatus according to this application;
FIG. 8 is another diagram of a communication apparatus according to this application;
FIG. 9 is another diagram of a communication apparatus according to this application; and
FIG. 10 is another diagram of a communication apparatus according to this application.

## DESCRIPTION OF EMBODIMENTS

First, some terms in embodiments of this application are described for ease of understanding by a person skilled in the art.

(1) Configuration and preconfiguration: In this application, both the configuration and the preconfiguration are used. The configuration means that a network device such as a base station or a server sends configuration information of some parameters or parameter values to a terminal by using a message or signaling, so that the terminal determines a communication parameter or a transmission resource based on the values or the information. Similar to the configuration, the preconfiguration may be a manner in which a network device such as a base station or a server sends parameter information or a parameter value to a terminal by using a communication link or a carrier, may be a manner in which a corresponding parameter or parameter value is defined in a standard, or may be a manner in which a related parameter or value is set in a terminal device in advance. This is not limited in this application. Further, these values and parameters may be changed or updated.

(2) In this application, "indicate" may include direct indication and indirect indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information may be indicated in a plurality of manners. For example, the to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitter device by sending configuration information to a receiver device. The configuration information may include, for example, but not limited to, one or a combination of at least two of radio resource control (radio resource control, RRC) signaling, media access control (media access control, MAC) layer signaling, and physical layer signaling. The MAC layer signaling includes, for example, a MAC control element (control element, CE), and the physical layer signaling includes, for example, downlink control information (downlink control information, DCI).

(3) Reference signal (reference signal, RS) In a communication system, to send and receive data, obtain system synchronization and feedback channel information, an uplink channel or a downlink channel needs to be estimated. Channel estimation refers to a process of reconstructing or restoring a received signal to compensate for signal distortion caused by channel fading and fading caused by noise, where changes in time domain and frequency domain of a channel are tracked by using reference signals predicted by a transmitter machine and a receiver machine. The reference signal is also referred to as a reference signal. The reference signals are distributed on different resource elements (resource element, RE) in time-frequency two-dimensional space in an orthogonal frequency division multiplexing (orthogonal frequency division multiplexing, OFDM) symbol, and have a known amplitude and phase.

For example, the RS may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS) used for downlink channel measurement, or may be a sounding reference signal (sounding reference signal, SRS) used for uplink channel measurement.

It should be understood that the foregoing listed reference signals are merely examples, and should not constitute any limitation on this application. This application does not exclude a possibility that another reference signal is defined in a future protocol to implement a same or similar function, and does not exclude a possibility that another reference signal is defined in a future protocol to implement different functions.

For ease of description, the following uses an example in which the reference signal is the SRS for description. In a 5G NR communication system, the SRS is used to estimate channel quality of different frequency bands.

For example, the SRS in embodiments of this application includes any one of the following:

a periodic sounding reference signal SRS, a semi-periodic SRS, or an aperiodic SRS. Details are as follows:

  Periodic SRS: The SRS is sent periodically.
  Semi-periodic SRS: A network device sends a start instruction (for example, a start instruction sent by using a MAC CE) that indicates an SRS sending start moment, and the network device sends an end instruction (for example, an end instruction sent by using a MAC CE) that indicates an SRS sending end moment. The SRS is periodically sent between the SRS sending start moment and the SRS sending end moment.

In addition, a reference signal port (resource port) may be a resource granularity occupied by a reference signal sent by a communication apparatus. The communication apparatus may be a network device or a terminal device. The following uses a terminal device as an example.

In a possible implementation, one reference signal port may correspond to one transmit antenna of the terminal device. In this implementation, a quantity of reference signal ports of the terminal device may be a quantity of transmit antennas of the terminal device.

In another possible implementation, one reference signal port may correspond to one precoding vector of a transmit antenna, that is, may correspond to one spatial beamforming direction. In this implementation, a quantity of reference signal ports of the terminal device may be less than a quantity of transmit antennas of the terminal device.

Usually, a plurality of reference signals corresponding to a plurality of reference signal ports on one reference signal resource occupy one or more time-frequency resources, and a plurality of reference signals that occupy a same time-frequency resource are code division multiplexed. For example, reference signals of different reference signal ports use different cyclic shifts (cyclic shift, CS) to occupy a same time-frequency resource.

Specifically, on the same time-frequency resource, the different reference signals of the different reference signal ports can avoid mutual interference in an orthogonal manner of code division multiplexing, and the orthogonal manner may be implemented by using cyclic shifts. When a delay spread of a channel is small, code division orthogonality can be essentially implemented by using CSs. A receiver may perform a specific operation, to cancel a signal using another CS and retain only a signal using a specific CS, to implement code division multiplexing.

In embodiments of this application, the reference signal port may be an SRS port. The SRS port may be indicated by an SRS port index pi.

In addition, the reference signal resource may be for configuring a transmission attribute of the reference signal, for example, a reference signal bandwidth, a time-frequency resource location, a port mapping relationship, a power factor, and a scrambling code. A transmitter device may send the reference signal based on the reference signal resource, and a receiver device may receive the reference signal based on the reference signal resource. One reference signal resource may include one or more RBs.

In embodiments of this application, the reference signal resource may be, for example, an SRS resource. The SRS resource (SRS resource) may include a quantity of SRS ports (number of SRS ports), a quantity of orthogonal frequency division multiplexing (orthogonal frequency division multiplexing, OFDM) symbols (number of OFDM symbols in the SRS resource), SRS bandwidth (SRS bandwidth), an SRS frequency domain position and shift (frequency domain position and configurable shift), frequency hopping bandwidth (frequency hopping bandwidth), a cyclic shift (cyclic shift), a transmission comb value (transmission comb value), a transmission comb offset (transmission comb offset), an SRS sequence ID (SRS sequence ID), and the like.

Generally, one reference signal resource set (resource Set) may include K (K≥1) reference signal resources. That one reference signal resource set includes K reference signal resources indicates that K reference signal resources are configured based on one reference signal resource set. In embodiments of this application, the reference signal resource set may be, for example, an SRS resource set (SRS resource set).

(4) Terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to a device X" may be understood as that a destination end of the information is the device X, and may include direct sending through an air interface, or include indirect sending through an air interface by another unit or module. "Receiving information from a device Y" may be understood as that a source end of the information is the device Y, and may include direct receiving from the device Y through an air interface, or include indirect receiving from the device Y from another unit or module through an air interface.

"Sending" may alternatively be understood as "outputting" of a chip interface, and "receiving" may alternatively be understood as "inputting" of a chip interface.

For example, a communication process between an entity A and an entity B is used as an example. In this application, that the entity A sends information to the entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in the RAN node or the terminal. Information receiving and sending may be information exchange between a RAN node and a terminal, for example, information exchange between a base station and a terminal. Information receiving and sending may alternatively be information exchange between two RAN nodes, for example, information exchange between a CU and a DU. Information receiving and sending may alternatively be information exchange between different modules in an apparatus, for example, information exchange between a chip in a terminal and another module in the terminal, or information exchange between a chip in a base station and another module in the base station.

(6) Precoding technology: When a channel state is known, a transmitter may process a to-be-sent signal by using a precoding matrix that matches a channel, and then send the to-be-sent signal, so that a precoded sent signal adapts to the channel. Therefore, in comparison with a processing process in which a receiver receives a non-precoded sent signal and eliminates inter-channel impact, a processing process in which the receiver receives the precoded sent signal and eliminates inter-channel impact is less complicated. Therefore, precoding processing is performed on the to-be-sent signal, so that received signal quality (for example, a signal to interference plus noise ratio (signal to interference plus noise ratio, SINR)) is improved. Transmission between the transmitter and a plurality of receivers can further be performed on a same time-frequency resource by using the precoding technology. That is, multiple user multiple input multiple output (multiple user multiple input multiple output, MU-MIMO) is implemented.

Optionally, the transmitter may be a network device, and the receiver may be a terminal device; or the transmitter may be a terminal device, and the receiver may be a terminal device.

It should be understood that related descriptions of the precoding technology are merely an example for ease of understanding, and are not intended to limit the protection scope of embodiments of this application. In a specific implementation process, the transmitter may alternatively perform precoding in another manner. For example, when channel information (for example, but not limited to a channel matrix) cannot be obtained, precoding is performed by using a preset precoding matrix or by using weighted processing. For brevity, specific content thereof is not described in this specification.

(7) Antenna port: The antenna port may be referred to as a port for short. It may be understood as a transmit antenna identified by a receiver, or a transmit antenna that can be spatially distinguished. One antenna port may be configured for each virtual antenna, each virtual antenna may be a weighted combination of a plurality of physical antennas, and each antenna port may correspond to one reference signal. Therefore, each antenna port may be referred to as a reference signal port, for example, a CSI-RS port, a demodulation reference signal (demodulation reference signal, DMRS), or an SRS port.

(8) Frequency domain unit: The frequency domain unit is a unit of a frequency domain resource, and may represent different frequency domain resource granularities. For example, the frequency domain unit may include but is not limited to a resource block (resource block, RB), a subcarrier, a resource block group (resource block group, RBG), or a precoding resource block group (precoding resource block group, PRG). In addition, a frequency domain length of one frequency domain unit may alternatively be one RB.

In embodiments of this application, a precoding matrix corresponding to the frequency domain unit may be a precoding matrix determined by performing channel measurement and feedback based on a reference signal on the frequency domain unit. The precoding matrix corresponding to the frequency domain unit may be for precoding data subsequently transmitted on the frequency domain unit. In the following descriptions, a precoding matrix or a precoding vector corresponding to a frequency domain unit may also be referred to as a precoding matrix or a precoding vector of the frequency domain unit for short.

(9) Frequency domain vector (frequency domain vector): The frequency domain vector may also be referred to as a frequency domain basis (frequency domain basis), a frequency domain component vector, or a frequency domain base vector, and may be for representing a vector of a change rule of a channel in frequency domain. The frequency domain vector may be referred to as a frequency domain DFT vector or an over-sampling frequency domain DFT vector. The following uses only an example in which the frequency domain vector is a frequency domain DFT vector for description. It may be understood that the frequency domain DFT vector mentioned below may also be expressed as an over-sampling DFT vector, a frequency domain offset vector, a frequency domain vector, or the like.

Each frequency domain DFT vector may indicate one change rule. When a signal is transmitted on a radio channel, the signal may arrive at a receive antenna through a plurality of paths from a transmit antenna. Frequency selective fading caused by a multipath delay is a change of a frequency domain channel. Therefore, change rules of channels in frequency domain that are caused by delays on different transmission paths may be represented by using different frequency domain DFT vectors.

A length of the frequency domain DFT vector may be determined based on a quantity of to-be-reported frequency domain units that is preconfigured in reporting bandwidth, may be determined based on a length of the reporting bandwidth, or may be a value predefined in a protocol. The length of the frequency domain DFT vector is not limited in this application. The reporting bandwidth may be, for example, CSI reporting bandwidth (csi-ReportingBand) carried in a channel state information (channel state information, CSI) reporting preconfiguration in higher layer signaling (for example, a radio resource control (radio resource control, RRC) message).

A length of a frequency domain DFT vector uf may be denoted as Nf. Nf is a positive integer. The frequency domain DFT vector may be, for example, a column vector or a row vector whose length is Nf. This is not limited in this application.

(10) Spatial domain vector (spatial domain vector): The spatial domain vector may be referred to as a spatial domain basis (Spatial domain basis), a spatial domain component vector, a beam (beam) vector, a spatial domain beam base vector, a spatial domain base vector, or the like. One spatial domain vector may correspond to one beam or one beam direction. The spatial domain vector may be one of vectors for constructing a channel matrix. Each element in the spatial domain vector may represent a weight of each antenna port (antenna port). Signals of antenna ports are linearly superimposed based on weights of the antenna ports indicated by using elements in the spatial domain vector, so that an area with a strong signal can be formed in a specific direction in space.

For ease of description, it is assumed that the spatial domain vector is denoted as u. A length of the spatial domain vector u may be a quantity N of transmit antenna ports, where N≥1 and is an integer. The spatial domain vector may be, for example, a column vector or a row vector whose length is N.

Optionally, the spatial domain basis may be in the following two forms.

Form 1: The spatial domain basis may be a regular DFT basis, and the DFT basis is an N*N square matrix.

It may be understood that when a spatial domain basis of a terminal device is implemented in the form 1, because the spatial domain basis is strongly related to a physical characteristic of an antenna array of the terminal device, a network device and the terminal device may determine the spatial domain basis through preconfiguration, or the terminal device may send indication information to the network device, to indicate the spatial domain basis by using the indication information.

In an implementation, the spatial domain vector is a discrete Fourier transform (discrete Fourier transform, DFT) vector. The DFT vector may be a vector in a DFT matrix.

In an implementation, the spatial domain vector is a conjugate transpose vector of a DFT vector. The DFT conjugate transpose vector may be a column vector in a conjugate transpose matrix of the DFT matrix.

In an implementation, the spatial domain vector is an oversampling DFT vector. The oversampling DFT vector may be a vector in an oversampling DFT matrix.

In an implementation, the spatial domain vector may be, for example, a two-dimensional (two-dimensional, 2D)-DFT vector defined in a type II (type II) codebook in the NR protocol 38.214 release 15 (release 15, R15). In other words, the spatial domain vector may be a 2D-DFT vector or an oversampling 2D-DFT vector.

Form 2: The spatial domain basis may be an eigenbasis, or may be referred to as an adaptive basis, an adaptive eigenbasis, or the like. The eigenbasis is an N*N square matrix.

It may be understood that, when a spatial domain basis of a terminal device is implemented in the form 2, because the spatial domain basis is associated with a network device communicating with the terminal device, the terminal device may send indication information to the network device, to indicate the spatial domain basis by using the indication information.

An eigenbasis set includes Nt groups of eigenbases that are in one-to-one correspondence with Nt antennas of the network device. A group of eigenbases corresponding to an $(nt)^{th}$ antenna in the Nt antennas are determined based on a channel matrix that corresponds to Nr antennas of the terminal device and the $(nt)^{th}$ antenna and that is in Nf frequency domain units or Nf delays. Specifically, the channel matrix that corresponds to the Nr antennas of the terminal device and the $(nt)^{th}$ antenna and that is in the Nf frequency domain units or the Nf delays is denoted as $H_4^{nt}$, and a dimension of $H_4^{nt}$ is Nr*Nf. Further, SVD is performed on $H_4^{nt}$ to obtain $H_4^{nt} = U_4^{nt} \sum_4^{nt} (V_4^{nt})^T$, where $U_4^{nt}$ is a left singular matrix with a dimension of Nf*Nf, $\sum_4^{nt}$ is a diagonal matrix with a dimension of Nf*Nr, and $V_4^{nt}$ is a right singular matrix with a dimension of Nr*Nr. Nr row vectors or Nr column vectors of $V_4^{nt}$ are the group of eigenbases corresponding to the $(nt)^{th}$ antenna in the Nt antennas. nt=1, 2, ..., Nt.

It should be noted that, when the following first communication apparatus is the terminal device and the following second communication apparatus is the network device, the Nt antennas of the network device may be M ports (or M antenna ports, M antennas, or the like) of the second communication apparatus described below, and the Nr antennas of the terminal device may be N ports (or N antenna ports, N antennas, or the like) of the first communication apparatus described below.

For example, an eigenbasis set includes Nt groups of eigenbases that are in one-to-one correspondence with Nt antennas of the network device. A group of eigenbases corresponding to an $(nt)^{th}$ antenna in the t antennas of the NN*N square matrix are determined based on a channel matrix that corresponds to Nr antennas of the terminal device and the $(nt)^{th}$ antenna and that is in Nf frequency domain units or Nf delays. Specifically, the channel matrix that corresponds to the Nr antennas of the terminal device and the $(nt)^{th}$ antenna and that is in the Nf frequency domain units or the Nf delays is denoted as $H_4^{nt}$, and a dimension of $H_4^{nt}$ is Nr*Nf. Further, SVD is performed on $H_4^{nt}$ to obtain $H_4^{nt} = U_4^{nt} \sum_4^{nt} (V_4^{nt})^T$, where $U_4^{nt}$ is a left singular matrix with a dimension of Nf*Nf, $\sum_4^{nt}$ is a diagonal matrix with a dimension of Nf*Nr, and $V_4^{nt}$ is a right singular matrix with a dimension of Nr*Nr. The Nr row vectors or the Nr column vectors of $V_4^{nt}$ are a group of eigenbases corresponding to the $(nt)^{th}$ antenna in the Nt antennas. nt=1, 2, ..., Nt.

For another example, an eigenbasis set includes Nf groups of eigenbases that are in one-to-one correspondence with Nf frequency domain units. A group of eigenbases corresponding to an $(nf)^{th}$ frequency domain unit in the Nf frequency domain units are determined based on a channel matrix that corresponds to Nr antennas of the terminal device and Nt antennas or Nt beams of the network device and that is in the $(nf)^{th}$ frequency domain unit. Specifically, the channel matrix that corresponds to the Nr antennas of the terminal device and the Nt antennas or the Nt beams and that is in the $(nf)^{th}$ frequency domain unit is denoted as $H_5^{nf}$, and a dimension of $H_5^{nf}$ is Nr*Nt. Further, SVD is performed on $H_5^{nf}$ to obtain $H_5^{nf} = U_5^{nf} \sum_5^{nf} (V_5^{nf})^T$, where $U_5^{nf}$ is a left singular matrix with a dimension of Nt*Nt, $\sum_5^{nf}$ is a diagonal matrix with a dimension of Nt*Nr, and $V_5^{nf}$ is a right singular matrix with a dimension of Nr*Nr. Nr row vectors or Nr column vectors of $V_5^{nf}$ are the group of eigenbases corresponding to the $(nf)^{th}$ frequency domain unit in the Nf frequency domain units. nf=1, 2, ..., Nf.

For another example, an eigenbasis set includes Nt groups of eigenbases that are in one-to-one correspondence with Nt beams of the network device. A group of eigenbases corresponding to an $(nt)^{th}$ beam in the Nt beams are determined based on a channel matrix that corresponds to Nr antennas of the terminal device and the $(nt)^{th}$ beam and that is in Nf frequency domain units or Nf delays. Specifically, the channel matrix that corresponds to the Nr antennas of the terminal device and the $(nt)^{th}$ beam and that is in the Nf frequency domain units or the Nf delays is denoted as $H^{nt}_{4beam}$ , and a dimension of $H^{nt}_{4beam}$ is Nr*Nf. Further, SVD is performed on $H^{nt}_{4beam}$ to obtain

$$H^{nt}_{4beam} = U^{nt}_{4beam} \Sigma^{nt}_{4beam} (V^{nt}_{4beam})^{T}$$ , where

$U^{nt}_{4beam}$ is a left singular matrix with a dimension of Nf*Nf, $\Sigma^{nt}_{4beam}$ is a diagonal matrix with a dimension of Nf*Nr, and $V^{nt}_{4beam}$ is a right singular matrix with a dimension of Nr*Nr. Nr row vectors or Nr column vectors of $V^{nt}_{4beam}$ are the group of eigenbases corresponding to the (nt)th beam in the Nt beams. nt=1, 2, ..., Nt.

For another example, an eigenbasis set includes Nf groups of eigenbases that are in one-to-one correspondence with Nf delays. A group of eigenbases corresponding to an (nf)th delay in the Nf delays are determined based on a channel matrix that corresponds to Nr antennas of the terminal device and Nt antennas or Nt beams of the network device and that is in the (nf)th delay. Specifically, the channel matrix that corresponds to the Nr antennas of the terminal device and the Nt antennas or the Nt beams and that is in the (nf)th delay is denoted as $H^{nf}_{5delay}$ , and a dimension of $H^{nf}_{5delay}$ is Nr*Nt. Further, SVD is performed on $H^{nf}_{5delay}$ to obtain

$$H^{nf}_{5delay} = U^{nf}_{5delay} \Sigma^{nf}_{5delay} (V^{nf}_{5delay})^{T}$$ , where

$U^{nf}_{5delay}$ is a left singular matrix with a dimension of Nt*Nt, $\Sigma^{nf}_{5delay}$ is a diagonal matrix with a dimension of Nt*Nr, and $V^{nf}_{5delay}$ is a right singular matrix with a dimension of Nr*Nr. Nr row vectors or Nr column vectors of $V^{nf}_{5delay} V^{nf}_{5delay}$ are the group of eigenbases corresponding to the (nf)th delay in the Nf delays. nf=1, 2, ..., Nf.

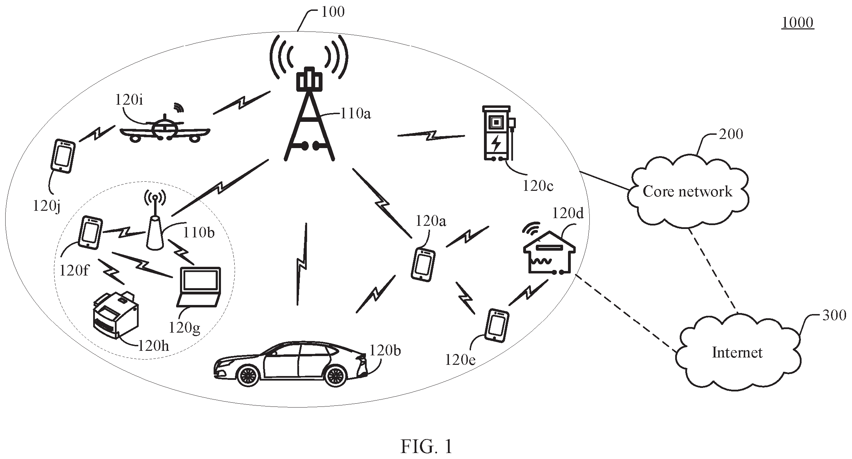

Refer to FIG. 1. FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU).

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). For ease of description, the following uses a base station as an example of the RAN node for description.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as a communication apparatus, 110a and 110b each in FIG. 1 may be referred to as a communication apparatus having a function of the base station, and 120a to 120j each in FIG. 1 may be referred to as a communication apparatus having a function of the terminal.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A terminal function may be performed by a module (for example, a chip or a modem) in the terminal, or may be performed by an apparatus including the terminal function.

In a wireless communication system (for example, the communication system shown in FIG. 1), as a key technology in wireless communication, a MIMO technology may be used for satisfying a high-speed transmission requirement. A communication process between a network device and a terminal device is used as an example. The network device performs channel measurement by using a reference signal to obtain channel state information (channel state information, CSI) (or referred to as channel information). Then, the network device may calculate precoding information between the network device and the terminal device based on the channel information, and subsequently, the network device and the terminal device may implement MIMO communication based on the precoding information.

In an implementation example, a downlink channel measurement process implemented by the network device based on a downlink reference signal is used as an example. The downlink reference signal sent by the network device may be a CSI-RS. The network device may receive feedback of the CSI-RS, so that the network device can perform downlink channel measurement based on the feedback of the CSI-RS, to obtain channel information. The CSI-RS is sent through a port of the network device, and overheads of the CSI-RS are related to a quantity of ports of the network device.

In another implementation example, an uplink channel measurement process implemented by the network device based on an uplink reference signal sent by the terminal device is used as an example. The uplink reference signal sent by the terminal device may be an SRS, so that the network device can perform uplink channel measurement based on the SRS, to obtain channel information. The SRS is sent through a port of the terminal device, and overheads of the SRS are related to a quantity of ports of the terminal device. In a process in which the network device obtains the channel information based on the SRS, the network device may transform the uplink SRS signal from an antenna-frequency domain signal to a beam-delay domain signal by using the uplink SRS signal. A power-delay profile (power-delay profile, PDP) of each beam is computed. Then, the network device may perform a delay domain noise reduction process. To be specific, the network device applies a hard window to a location of a non-zero tap of a delay domain signal based on the PDP, uses a signal outside the hard window as noise power, sets noise outside the hard window to zero, and performs noise reduction on the non-zero tap in the hard window by using estimated noise power. Further, the network device performs a beam domain noise reduction process. To be specific, the network device reserves several strong beams, and sets energy of remaining beams to zero, considering that signals received on the remaining beams are interference or noise. After the foregoing noise reduction, the network device may obtain the channel information based on the SRS.

Then, the network device computes, by using the obtained channel information, precoding information required for MIMO, thereby improving signal transmission quality or a rate. Usually, for a time division duplexing (time division duplexing, TDD) system, because an uplink and a downlink may be located in a same frequency band, an uplink and a downlink of a radio channel have reciprocity (in other words, it may be considered that an uplink channel and a downlink channel are the same). Therefore, the network device may determine, by using the uplink channel information obtained based on the SRS, the precoding information required for MIMO. For a frequency division duplexing (frequency division duplexing, FDD) system, because an uplink and a downlink are usually in different frequency bands, the network device may determine, by using downlink channel information obtained based on the feedback of the CSI-RS, the precoding information required for MIMO.

However, in a MIMO system, a quantity of ports of a network device and/or a terminal device is likely to increase gradually, driven by rising frequency bands and a growing demand for high-rate communication. Consequently, overheads of a reference signal (for example, a CSI-RS or an SRS) that is for channel measurement increase, and more transmission resources are occupied, thereby affecting network throughput performance.

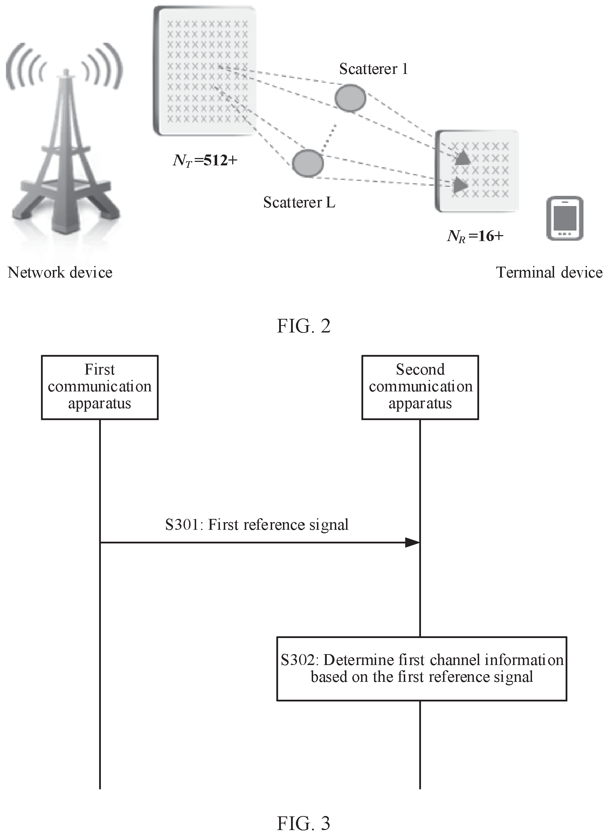

In an implementation example, in a MIMO scenario, a quantity of ports of the terminal device and a quantity of ports of the network device increase sharply. For example, compared with an example in which the quantity of ports of the terminal device is 4 and the quantity of ports of the network device is 16, in an example shown in FIG. 2, a quantity (denoted as $N_R$) of ports of the terminal device is 16 and a quantity (denoted as $N_T$) of ports of the network device is 512. As a result, CSI-RS overheads increase sharply. It is estimated that an CSI-RS occupies 16% or more air interface resources, and SRS overheads also increase to 4 times or more. Consequently, time domain resources occupied by an SRS increase to 4 times or more.

To resolve the foregoing problem, this application provides a communication method and a related device, to transmit a reference signal by using fewer resources, thereby improving resource utilization and improving network throughput performance. Detailed descriptions are provided below with reference to the accompanying drawings.

FIG. 3 is a diagram of a communication method according to this application. The method includes the following steps.

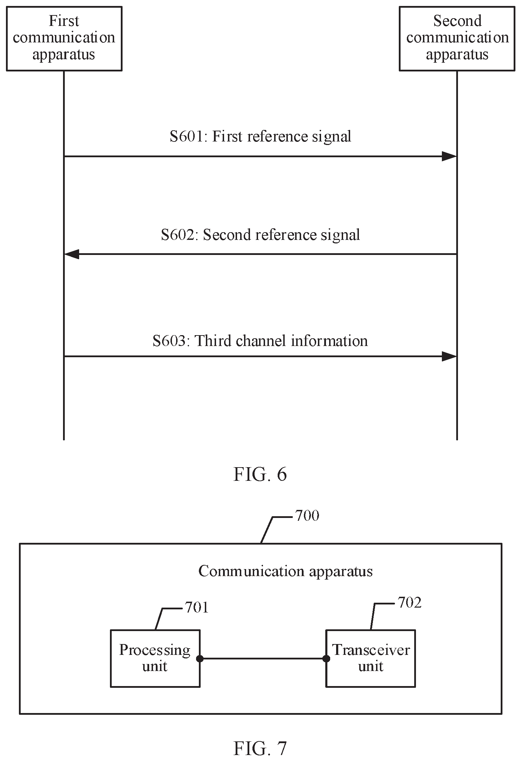

It should be noted that in FIG. 3 and FIG. 6 below, an example in which a first communication apparatus and a second communication apparatus are used as execution bodies of the interaction example is used to illustrate the method. However, the execution bodies of the interaction example are not limited in this application. For example, in FIG. 3 and FIG. 6 below, the execution bodies of the method may alternatively be chips, chip systems, processors, logic modules, software, or the like in the communication apparatuses. The first communication apparatus may be a terminal device, and the second communication apparatus may be a network device. Alternatively, the first communication apparatus may be a network device, and the second communication apparatus may be a terminal device. Alternatively, both the first communication apparatus and the second communication apparatus are terminal devices (for example, the method may be applied to a communication process of different terminal devices in a sidelink communication scenario).

S301: The first communication apparatus sends a first reference signal, and correspondingly, the second communication apparatus receives the first reference signal.

S302: The second communication apparatus determines first channel information based on the first reference signal.

Specifically, the first reference signal sent by the first communication apparatus in step 301 corresponds to K reference signal ports, where K is a positive integer. In step S302, the second communication apparatus can determine the first channel information based on the first reference signal, where the first channel information is channel information corresponding to K ports in N ports of the first communication apparatus, the first channel information is for determining second channel information, the second channel information is channel information corresponding to the N ports, and N is a positive integer greater than K.

Optionally, a value of N is a total quantity of physical antennas, a total quantity of physical ports, or a total quantity of virtual ports of the first communication apparatus, or a quantity of ports indicated by first capability information, where the first capability information indicates a quantity of ports of the first communication apparatus. For example, the first capability information may be capability information sent by the first communication apparatus, or capability information indicated by a scheduling device (for example, a controller, a server, or a network device) of the first communication apparatus. This is not limited herein.

In an implementation example, the first communication apparatus may be a terminal device, and the second communication apparatus may be a network device. In this case, the first reference signal may be an SRS, the first channel information determined based on the first reference signal may be uplink channel information, and the second channel information may be downlink channel information. In addition, a second reference signal and a second reference signal mentioned below may be CSI-RSs, and third channel information and third channel information mentioned below may include PMIs.

In another implementation example, the first communication apparatus may be a network device, and the second communication apparatus may be a terminal device. In this case, the first reference signal may be a CSI-RS, the first channel information determined based on the first reference signal may be downlink channel information, and the second channel information may be uplink channel information. In addition, a second reference signal and a second reference signal mentioned below may be SRSs, and third channel information and third channel information mentioned below may include T-PMIs.

It should be understood that a resource carrying the K reference signal ports may be determined through configuration. An example in which the first communication apparatus is a terminal device and the second communication apparatus is a network device is used. The first communication apparatus may receive configuration information from a network device (for example, the network device is the second communication apparatus). The configuration information is for configuring a resource of a reference signal resource set (resource set). The reference signal resource set may include the K reference signal ports, so that the first communication apparatus can send, based on the resource configured by using the configuration information, the first reference signal corresponding to the K reference signal ports. Similarly, for another reference signal (for example, a second reference signal and a second reference signal) mentioned below, a resource carrying the another reference signal may also be determined through configuration. For example, the another reference signal includes a CSI-RS. Resource configuration may be performed on the CSI-RS at a plurality of granularities such as a resource configuration (resourceConfig), a resource set (resourceSet), and a resource (resource) by using CSI-RS configuration information received by the first communication apparatus.

It should be noted that, in the technical solution shown in FIG. 3, the K reference signal ports satisfy one or more of the following implementation 1 to implementation 3. The following provides detailed descriptions with reference to some implementation examples.

Implementation 1: The K reference signal ports correspond to K rows, K columns, or K indexes in a spatial domain basis of the first communication apparatus.

Specifically, in the implementation 1, the spatial domain basis of the first communication apparatus may be represented as an N*N square matrix. If the value of N is a total quantity of virtual ports of the first communication apparatus, N rows (or N columns) in the N*N square matrix correspond to N virtual ports. The first channel information determined based on the first reference signal sent by the K reference signal ports corresponds to K virtual ports in the N virtual ports. Therefore, the K reference signal ports may correspond to the K rows, the K columns, or the K indexes in the spatial domain basis. Therefore, the first communication apparatus and the second communication apparatus may determine that the K reference signal ports for sending the first reference signal correspond to the K rows, K columns, or K indexes in the spatial domain basis of the first communication apparatus, so that after the second communication apparatus subsequently obtains the first channel information based on the first reference signal in step S302, the second communication apparatus can determine the second channel information based on the correspondence.

Optionally, in the implementation 1, the spatial domain basis includes a DFT basis and/or an eigenbasis. The eigenbasis may be replaced with an adaptive basis, an adaptive eigenbasis, or the like.

Implementation 2: The K reference signal ports correspond to K antenna indexes in N antenna indexes, where the N antenna indexes are associated with the N ports.

Specifically, in the implementation 2, the first communication apparatus may include N antennas. The first channel information determined based on the first reference signal sent by the K reference signal ports corresponds to K antennas in the N antennas. Therefore, the K reference signal ports may correspond to the K antenna indexes in the N antenna indexes. Therefore, the first communication apparatus and the second communication apparatus may determine that the K reference signal ports for sending the first reference signal correspond to the K antenna indexes in the N antenna indexes associated with the N ports, so that after the second communication apparatus subsequently obtains the first channel information based on the first reference signal in step S302, the second communication apparatus can determine the second channel information based on the correspondence.

Optionally, in the implementation 2, the N ports of the first communication apparatus may be in one-to-one correspondence with the N antenna indexes.

Optionally, in the implementation 2, the N antenna indexes may be antenna indexes of N antennas included in an antenna array regularly arranged (for example, rectangularly arranged or circularly arranged) in the first communication apparatus, or the N antenna indexes may be antenna indexes of N antennas included in an antenna array irregularly arranged in the first communication apparatus. This is not limited herein.

Implementation 3: The K reference signal ports correspond to indexes of channel information of K ports in channel information of N ports included in third channel information, where the third channel information is obtained based on a second reference signal.

For example, the first communication apparatus is a terminal device, and the second communication apparatus is a network device. In this case, the first reference signal may be an SRS, the first channel information determined based on the first reference signal may be uplink channel information, and the second channel information may be downlink channel information. In addition, the second reference signal may be a CSI-RS, and correspondingly, the third channel information may include a PMI. In the implementation 3, the first communication apparatus may receive the second reference signal (namely, a CSI-RS), and downlink channel information $H_t$ obtained by the first communication apparatus based on the CSI-RS may be represented as:

$$H_t = W_1 * W_2 * W_3^H$$

$H_t$ represents downlink channel information corresponding to a CSI-RS sent through a CSI-RS port t of the second communication apparatus, a matrix dimension of $H_t$ is N*Nf, N represents the quantity of ports of the first communication apparatus, and Nf represents a quantity of frequency domain units.

$W_1$ represents the spatial domain basis of the first communication apparatus, and a matrix dimension of $W_1$ is N*N.

$W_2$ represents information carried by the PMI, and a matrix dimension of $W_2$ is N*Nf. $W_3^H$ is a conjugate transposition of $W_3$, $W_3$ represents a frequency domain basis of the first communication apparatus, and a matrix dimension of $W_3$ is Nf*Nf.

It can be learned from the foregoing implementation process that the third channel information is associated with one or more of $H_t$, $W_1$, and $W_2$ associated with the N ports, where one of dimensions of matrix representations of $H_t$, $W_1$, and $W_2$ is N, and the dimension corresponds to the channel information of the N ports in the first communication apparatus. In other words, the first channel information determined based on the first reference signal sent by the K reference signal ports corresponds to the channel information of the K ports in the channel information of the N ports included in the third channel information. Therefore, the first communication apparatus and the second communication apparatus may determine that the K reference signal ports correspond to the indexes of the channel information of the K ports in the channel information of the N ports included in the third channel information, so that after the second communication apparatus subsequently obtains the first channel information based on the first reference signal in step S302, the second communication apparatus can determine the second channel information based on the correspondence.

Optionally, in the implementation 3, the N ports of the first communication apparatus may be in one-to-one correspondence with the N antenna indexes.

It should be understood that the second channel information is the channel information corresponding to the N ports. It may be understood as that the second channel information may include channel information of all of the N ports. Therefore, a matrix representation of the second channel information may include N rows of information (or N columns of information), where the N rows of information (or the N columns of information) respectively correspond to the channel information of all of the N ports.

It should be understood that the first reference signal corresponding to the K reference signal ports is for determining the second channel information corresponding to the K ports in the N ports. In other words, the K reference signal ports correspond to the K ports in the N ports. To be specific, the K reference signal ports correspond to indexes of the K ports in the N ports. In other words, the first reference signal corresponding to the K reference signal ports may be for determining the channel information corresponding to the K ports. Therefore, in one or more of the foregoing items, the K reference signal ports may be replaced with the indexes of the K ports in the N ports, that is, the indexes of the K ports in the N ports satisfy one or more of the foregoing items.

In addition, the second channel information may be the channel information corresponding to the N ports. The K reference signal ports correspond to the indexes of the K ports in the N ports. To be specific, the first channel information determined based on the first reference signal may be for determining the channel information corresponding to the K ports in the N ports in the second channel information. Therefore, in an implementation process of one or more of the foregoing implementation 1 to implementation 3, a receiver (for example, the second communication apparatus) of the first channel information can accurately learn of, based on the first channel information, the channel information corresponding to the K ports in the N ports in the second channel information.

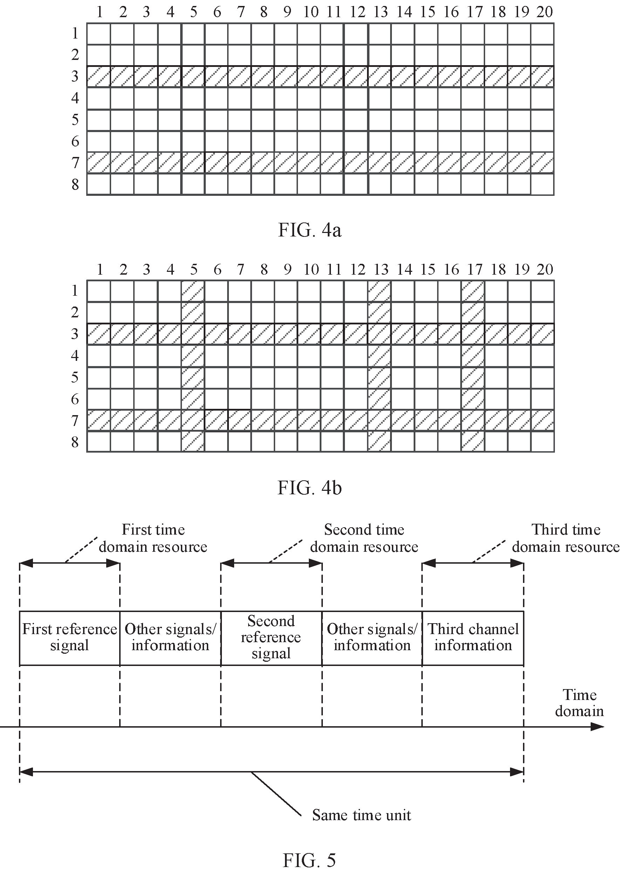

In an implementation example, as described above, the second channel information may be the channel information corresponding to the N ports. The following provides, by using an example in which the value of N is 8, example descriptions with reference to graphical representations of channel information of multi-port channel information shown in FIG. 4a and FIG. 4b. In FIG. 4a and FIG. 4b, a channel corresponding to one frequency domain unit (for example, one RE, one RB, or one scheduling unit) is used as an example. The second channel information may include information in 20*8 boxes shown in FIG. 4a or FIG. 4b. The first communication apparatus includes N=8 ports, and the second communication apparatus includes M=20 ports. In this case, the second channel information corresponding to the frequency domain unit may be represented as an N*M-dimensional matrix shown in FIG. 4a, an element in an $x^{th}$ row and a $y^{th}$ column in the matrix corresponds to channel state information that is of an $x^{th}$ port of the first communication apparatus and a $y^{th}$ port of the second communication apparatus and that is in the second channel information.

In the example shown in FIG. 4a, the channel information corresponding to the N ports included in the second channel information may be eight (that is, an example in which the value of N is 8) vertical rows of information in FIG. 4a, and each row represents channel information corresponding to one of the N ports. In this example, the K ports in the N ports are two ports, namely, a $3^{rd}$ row and a $7^{th}$ row in which the diagonal boxes in FIG. 4a are located. In other words, in an implementation process of one or more of the foregoing implementation 1 to implementation 3, both the first communication apparatus and the second communication apparatus may determine that the first channel information may be for determining channel information corresponding to the $3^{rd}$ row and the $7^{th}$ row in the second channel information in FIG. 4a.

In addition, in the example shown in FIG. 4a, an example in which a terminal device is the first communication apparatus including the N (an example in which the value of N is 8) ports is used. In a conventional channel information obtaining process, the terminal device needs to send an uplink reference signal (for example, an SRS) through eight ports to obtain channel information. However, in the foregoing technical solution, the terminal device sends the first reference signal through ports corresponding to the $3^{rd}$ row and the $7^{th}$ row, so that the network device obtains the first channel information based on the first reference signal. The first channel information may be represented as information in the 3rd row and the 7th row in FIG. 4a. Then, the network device may determine, by using a mathematical method and based on the obtained first channel information, a value of a blank box other than the diagonal boxes, to obtain the second channel information. Therefore, in a manner of performing joint channel measurement on reference signals sent by both communication parties to determine channel information, reference signal overheads can be greatly reduced. In addition, in the implementation process of one or more of the foregoing implementation 1 to implementation 3, the second communication apparatus can accurately learn of, based on the first channel information, the channel information corresponding to the K ports in the N ports in the second channel information.

Optionally, the mathematical method may include implementations such as a compressive perception algorithm and artificial intelligence (artificial intelligence, AI).

In a possible implementation, the method further includes: The first communication apparatus sends or receives first indication information, where the first indication information indicates the one or more items. Specifically, the first communication apparatus may send the first indication information to the second communication apparatus, or the first communication apparatus may receive the first indication information from the second communication apparatus, where the first indication information indicates the one or more items, so that both communication parties can reach a consensus understanding of the one or more items, thereby improving accuracy of determining the second channel information based on the first channel information.

In another possible implementation, the one or more items are preconfigured or predefined. Specifically, the foregoing one or more items may be preconfigured or predefined, so that overheads can be reduced, and implementation complexity can be reduced.

In a possible implementation, the method further includes: The first communication apparatus receives the second reference signal, where the second reference signal corresponds to P reference signal ports, and P is a positive integer. The first communication apparatus sends the third channel information, where the third channel information is obtained based on the second reference signal, the third channel information is channel information corresponding to P ports in M ports, the third channel information is for determining the second channel information, and the second channel information is channel information corresponding to the N ports and the M ports. Specifically, the first communication apparatus may further receive the second reference signal corresponding to the P reference signal ports. Then, the first communication apparatus may send the third channel information obtained based on the second reference signal. The third channel information is the channel information corresponding to the P ports in the M ports, and the third channel information and the first channel information are for determining the second channel information. Therefore, in a manner of performing joint channel measurement on reference signals sent by both communication parties to determine channel information, measurement overheads of a reference signal can be decoupled from a quantity of ports of a communication apparatus, thereby further reducing reference signal overheads and further improving network throughput performance.

It should be understood that the second channel information is the channel information corresponding to the N ports and the M ports. Because channels have reciprocity, information about channels between the M ports and the N ports is similar to (or the same as, or approximately the same as) information about channels between the N ports and the M ports. Therefore, the second channel information may be understood as the channel information corresponding to the N ports and the M ports, or the second channel information may be understood as the information about the channels between the N ports and the M ports.

It should be understood that, that the second channel information is the channel information corresponding to the N ports and the M ports may be understood in a plurality of manners.

In a possible solution, the second channel information may include information about channels between each of the M ports and the N ports. Therefore, the matrix representation of the second channel information may include M rows of information (or M columns of information), where the M rows of information (or the M columns of information) respectively correspond to the information about the channels between each of the M ports and the N ports.

In another possible solution, the second channel information may include information about channels between each of the N ports and the M ports. Therefore, the matrix representation of the second channel information may include N rows of information (or N columns of information), where the N rows of information (or the N columns of information) respectively correspond to the information about the channels between each of the N ports and the M ports.

Optionally, the second reference signal and the second reference signal received by the first communication apparatus are from the second communication apparatus. The second reference signal and the second reference signal may be a same reference signal, or may be different reference signals. This is not limited herein.

In a possible implementation, the P reference signal ports correspond to indexes of the P ports in the M ports. Specifically, the second channel information may be the channel information corresponding to the N ports and the M ports. The P reference signal ports correspond to the indexes of the P ports in the M ports. To be specific, the third channel information determined based on the second reference signal may be for determining the channel information corresponding to the P ports in the M ports in the second channel information. Therefore, in an index correspondence manner, a receiver of the third channel information can accurately learn of, based on the third channel information, the channel information corresponding to the P ports in the M ports in the second channel information.

In a possible implementation, the method further includes: The first communication apparatus receives or sends second indication information, where the second indication information indicates the indexes of the P ports in the M ports. Specifically, the first communication apparatus may send the second indication information to the second communication apparatus, or the first communication apparatus may receive the second indication information from the second communication apparatus, where the second indication information indicates the indexes of the P ports in the M ports, so that both communication parties can reach a consensus understanding of the one or more items, thereby improving accuracy of determining the second channel information based on the third channel information.

Optionally, the second indication information is preconfigured or predefined.

Optionally, the receiver of the third channel information and a receiver of the first reference signal may be the second communication apparatus, a value of M may be a total quantity of physical antennas, a total quantity of physical ports, or a total quantity of virtual ports of the second communication apparatus, or a quantity of ports indicated by second capability information, where the second capability information indicates a quantity of ports of the second communication apparatus. For example, the second capability information may be capability information sent by the second communication apparatus, or capability information indicated by a scheduling device (for example, a controller, a server, or a network device) of the second communication apparatus. This is not limited herein.

In an implementation example, in the example shown in FIG. 4b, the channel information corresponding to the N ports included in the second channel information may be eight (that is, an example in which the value of N is 8) vertical rows of information in FIG. 4b. As described above, in an implementation process of one or more of the foregoing implementation 1 to implementation 3, both the first communication apparatus and the second communication apparatus may determine that the first channel information determined based on the first reference signal corresponding to the K reference signal ports may be for determining channel information corresponding to a $3^{rd}$ row and a $7^{th}$ row in the second channel information in FIG. 4b.

In addition, in the example shown in FIG. 4b, the channel information corresponding to the M ports included in the second channel information may be 20 (that is, an example in which the value of M is 20) horizontal columns of information in FIG. 4b, and each column represents channel information of one of the M ports. In this example, the P ports in the M ports are three ports, namely, a $5^{th}$ column, a $13^{th}$ column, and a $17^{th}$ column in which diagonal boxes in FIG. 4b are located. According to the foregoing implementation process of the second indication information, both the first communication apparatus and the second communication apparatus may determine that the third channel information determined based on the second reference signal corresponding to the P reference signal ports may be for determining channel information corresponding to the $5^{th}$ column, the $13^{th}$ column, and the $17^{th}$ column in the second channel information in FIG. 4b.

In addition, in the example shown in FIG. 4b, an example in which a terminal device is the first communication apparatus including N (an example in which the value of N is 8) ports and a network device is the second communication apparatus including M (an example in which the value of M is 20) ports is used. In a conventional channel information obtaining process, the network device needs to send a downlink reference signal (for example, a CSI-RS) through 20 ports to obtain channel information; or the terminal device needs to send an uplink reference signal (for example, an SRS) through eight ports to obtain channel information. In the foregoing technical solution, the network device sends the second reference signal through ports corresponding to the $5^{th}$ column, the $13^{th}$ column, and the $17^{th}$ column, and the terminal device performs further feedback, so that the network device obtains third channel information corresponding to the second reference signal. The third channel information may be represented as information in the $5^{th}$ column, the $13^{th}$ column, and the $17^{th}$ column in FIG. 4b. The terminal device sends the first reference signal through ports corresponding to a $3^{rd}$ row and a $7^{th}$ row, so that the network device obtains the first channel information based on the first reference signal. The first channel information may be represented as information in the $3^{rd}$ row and the $7^{th}$ row in FIG. 4b. Then, the network device may determine, by using a mathematical method and based on the obtained third channel information and first channel information, a value of a blank box other than the diagonal boxes, to obtain the second channel information. Therefore, in a manner of performing joint channel measurement on reference signals sent by both communication parties to determine channel information, reference signal overheads can be greatly reduced.

Optionally, in the example shown in FIG. 4b, for a box in which the third channel information and the first channel information overlap (for example, a box in the $3^{rd}$ row and the $5^{th}$ column, a box in the $3^{rd}$ row and the $13^{th}$ column, a box in the $3^{rd}$ row and the $17^{th}$ column, a box in the $7^{th}$ row and the $5^{th}$ column, a box in the $7^{th}$ row and the $13^{th}$ column, or a box in the $7^{th}$ row and the $17^{th}$ column), a value of the second channel information in the overlapping box may be a value of the third channel information in the box (that is, a value of the first channel information in the box is ignored), may be a value of the first channel information (that is, a value of the third channel information in the box is ignored), or may be an average value (for example, weighted averaging or arithmetic averaging) of a value of the third channel information in the box and a value of the first channel information in the box. This is not limited herein.

In a possible implementation, the first reference signal is carried on a first time domain resource, the second reference signal is carried on a second time domain resource, and the third channel information is carried on a third time domain resource. The first time-frequency resource satisfies at least one of the following:

a time interval between the first time domain resource and the second time domain resource is less than or equal to X time units, where X is a positive number (for example, a value of X is 1, 2, or 4);
a time interval between the first time domain resource and the third time domain resource is less than or equal to Y time units, where Y is a positive number (for example, a value of Y is 1, 2, or 4);
the first time domain resource and the second time domain resource are located in a same time unit; and
the first time domain resource and the third time domain resource are located in a same time unit.

It should be noted that either of the time interval between the first time domain resource and the second time domain resource and the time interval between the first time domain resource and the third time domain resource may be implemented in a plurality of manners. For example, the time interval may include a time interval between a start moment of one time domain resource and a start moment of another time domain resource, the time interval may include a time interval between an end moment of one time domain resource and an end moment of another time domain resource, the time interval may include a time interval between an end moment of one time domain resource and a start moment of another time domain resource, the time interval may include a time interval between a start moment of one time domain resource and an end moment of another time domain resource, or the time interval may include a time interval between a $Q^{th}$ (Q is a positive integer) OFDM symbol of one time domain resource and a $Q^{th}$ OFDM symbol of another time domain resource.

Optionally, that a signal/a piece of information is carried on a time domain resource (for example, the first reference signal is carried on the first time domain resource, the second reference signal is carried on the second time domain resource, or the third channel information is carried on the third time domain resource) may be understood as that the signal/information occupies the time domain resource, or a resource occupied by the signal/information in time domain is the time domain resource.

In this application, the time unit may include a symbol, a slot, a mini-slot, a sub-frame, a frame, and the like. This is not limited herein.

In an implementation example, an implementation process shown in FIG. 5 is used as an example. There may be an idle time domain resource between any two signals in the first reference signal, the second reference signal, and the third channel information, to transmit other signals/information, or there may be no idle time domain resource between the two signals, that is, the two signals are consecutive in time domain. In addition, the first reference signal, the second reference signal, and the third channel information may be located in a same time unit (for example, a same slot).

Specifically, the first time domain resource for carrying the first reference signal and the third time domain resource for carrying the third channel information, and/or the first time domain resource for carrying the first reference signal and the second time domain resource for carrying the second reference signal satisfy at least one of the foregoing items, so that the first time domain resource and the second time domain resource can be as close as possible, and/or the first time domain resource and the third time domain resource can be as close as possible. The first reference signal is for determining the first channel information between the first communication apparatus and the receiver (for example, the second communication apparatus) of the first reference signal, and the second reference signal is for determining the third channel information between a transmitter (for example, the second communication apparatus) of the second reference signal and the first communication apparatus. When at least one of the foregoing items is satisfied, channel conditions corresponding to the two pieces of channel information can be reciprocal as much as possible, thereby improving a matching degree between the second channel information determined based on the first channel information and the third channel information and the channel conditions.

Based on the technical solution shown in FIG. 3, the first reference signal sent by the first communication apparatus in step S301 is for determining the first channel information corresponding to the K ports in the N ports of the first communication apparatus, and the first channel information is for determining the second channel information corresponding to the N ports. The K reference signal ports satisfy one or more of the foregoing items. In other words, after the second communication apparatus determines, in step S302 based on reference signals corresponding to the K ports, the first channel information corresponding to the K ports, the second communication apparatus can further determine, based on one or more of the foregoing items, the channel information corresponding to the N ports, where K is less than N. Therefore, channel information can be determined by the first communication apparatus sending reference signals corresponding to a part of ports, so that reference signal overheads can be reduced, and reference signals can be transmitted by using fewer resources, thereby improving resource utilization and improving network throughput performance.

In addition, the scenario shown in FIG. 2 is used as an example. There may be one or more scatterers (for example, a scatterer 1 to a scatterer L in FIG. 2, where L is an integer greater than 1) between the terminal device and the network device. Usually, a larger quantity of scatterers results in more transmission paths between the terminal device and the network device. For example, in FIG. 2, a transmission path corresponding to the quantity of scatterers is 3. In a scenario in which the quantity of ports of the terminal device is 4 and the quantity of ports of the network device is 16, a matrix dimension of a matrix representation of channel information between the terminal device and the network device may be 4*16, and a rank (RANK) of the 4*16 matrix may be 3. However, in a scenario in which the quantity of ports of the terminal device is 16 and the quantity of ports of the network device is 512, a matrix dimension of a matrix representation of channel information between the terminal device and the network device may be 16*512. When the quantity of scatterers remains unchanged, a rank of the 16*512 matrix is still 3. It can be learned that an increase in a quantity of ports causes enhancement of spatial domain sparseness. The sparseness implies that after channel information is abstracted into a channel matrix, a rank of the channel matrix is actually decoupled from a channel dimension (that is, a quantity of ports), but depends on a quantity of scatterers in space. After the sparseness increases, that is, the rank of the channel is further less than the channel dimension, in the foregoing technical solution, to obtain complete observation (that is, the second channel information corresponding to the N ports) of the channel matrix, lossless or low-loss recovery may be performed by using an observation value (that is, the first channel information corresponding to the K reference signal ports) less than the channel dimension.

FIG. 6 is another diagram of a communication method according to this application. The method includes the following steps.

S601: A first communication apparatus sends a first reference signal, and correspondingly, a second communication apparatus receives the first reference signal. The first reference signal is carried on a first time domain resource.

S602: The second communication apparatus sends a second reference signal, and correspondingly, the first communication apparatus receives the second reference signal. The second reference signal is carried on a second time domain resource.

S603: The first communication apparatus sends third channel information, and correspondingly, the second communication apparatus receives the third channel information. The third channel information is obtained based on the second reference signal, and the third channel information is carried on a third time domain resource. First channel information and the third channel information are for determining information about a channel between the first communication apparatus and the second communication apparatus.

The first time-frequency resource satisfies at least one of the following:

a time interval between the first time domain resource and the second time domain resource is less than or equal to X time units, where X is a positive integer;
a time interval between the first time domain resource and the third time domain resource is less than or equal to Y time units, where Y is a positive number;
the first time domain resource and the second time domain resource are located in a same time unit; and
the first time domain resource and the third time domain resource are located in a same time unit.

In an implementation example, the first communication apparatus may be a terminal device, and the second communication apparatus may be a network device. In this case, the second reference signal may be a CSI-RS, the first reference signal may be an SRS, and the third channel information may include a PMI.

In another implementation example, the first communication apparatus may be a network device, and the second communication apparatus may be a terminal device. In this case, the second reference signal includes an SRS, the first reference signal is a CSI-RS, and the third channel information includes a T-PMI.

It should be noted that, for a communication process in FIG. 6, refer to the descriptions of FIG. 3 and related embodiments.

Based on the technical solution shown in FIG. 6, the first reference signal sent by the first communication apparatus in step S601 may be for determining the first channel information, and the second reference signal received by the first communication apparatus in step S602 may be for determining the third channel information. Subsequently, a receiver (for example, the second communication apparatus) of the first reference signal and the third channel information may further determine the second channel information between the first communication apparatus and the second communication apparatus based on the first channel information and the third channel information. In addition, the first time domain resource for carrying the first reference signal and the third time domain resource for carrying the third channel information, and/or the first time domain resource for carrying the first reference signal and the second time domain resource for carrying the second reference signal satisfy at least one of the foregoing items, so that the first time domain resource and the second time domain resource can be as close as possible, and/or the first time domain resource and the third time domain resource can be as close as possible. The first reference signal is for determining the first channel information between the first communication apparatus and the receiver (for example, the second communication apparatus) of the first reference signal, and the second reference signal is for determining the third channel information between a transmitter (for example, the second communication apparatus) of the second reference signal and the first communication apparatus. When at least one of the foregoing items is satisfied, channel conditions corresponding to the two pieces of channel information can be reciprocal as much as possible, thereby improving a matching degree between the second channel information determined based on the first channel information and the third channel information and the channel conditions.

In addition, in a manner of performing joint channel measurement on reference signals sent by both communication parties to determine channel information, measurement overheads of a reference signal can be decoupled from a quantity of ports of a communication apparatus, so that reference signal overheads can be reduced, and a reference signal is transmitted by using fewer resources, thereby improving resource utilization and improving network throughput performance.

Refer to FIG. 7. An embodiment of this application provides a communication apparatus 700. The communication apparatus 700 can implement functions of the communication apparatus (the communication apparatus is the first communication apparatus or the second communication apparatus) in the foregoing method embodiments, and therefore can also implement beneficial effects of the foregoing method embodiments. In this embodiment of this application, the communication apparatus 700 may be a communication apparatus, or may be an integrated circuit, an element, or the like in the communication apparatus, for example, a chip.

In a possible implementation, when the apparatus 700 is configured to perform the method performed by the first communication apparatus in the FIG. 3 and related embodiments, the apparatus 700 includes a processing unit 701 and a transceiver unit 702. The processing unit 701 is configured to determine K reference signal ports corresponding to a first reference signal, where K is a positive integer, the first reference signal is for determining first channel information, the first channel information is channel information corresponding to K ports in N ports of the first communication apparatus, the first channel information is for determining second channel information, the second channel information is channel information corresponding to the N ports, N is a positive integer greater than K, and the K reference signal ports satisfy one or more of the following: the K reference signal ports correspond to K rows, K columns, or K indexes in a spatial domain basis of the first communication apparatus; the K reference signal ports correspond to K antenna indexes in N antenna indexes, where the N antenna indexes are associated with the N ports; and the K reference signal ports correspond to indexes of channel information of the K ports in channel information of the N ports included in third channel information, where the third channel information is obtained based on a second reference signal. The transceiver unit 702 is configured to send the first reference signal.

In a possible implementation, when the apparatus 700 is configured to perform the method performed by the second communication apparatus in the FIG. 3 and related embodiments, the apparatus 700 includes a processing unit 701 and a transceiver unit 702. The transceiver unit 702 is configured to receive a first reference signal, where the first reference signal corresponds to K reference signal ports, and K is a positive integer. The processing unit 701 is configured to determine first channel information based on the first reference signal, where the first channel information is channel information corresponding to K ports in N ports of a first communication apparatus, the first channel information is for determining second channel information, the second channel information is channel information corresponding to the N ports, N is a positive integer greater than K, and the K reference signal ports satisfy one or more of the following: the K reference signal ports correspond to K rows, K columns, or K indexes in a spatial domain basis of the first communication apparatus; the K reference signal ports correspond to K antenna indexes in N antenna indexes, where the N antenna indexes are associated with the N ports; and the K reference signal ports correspond to indexes of channel information of the K ports in channel information of the N ports included in third channel information, where the third channel information is obtained based on a second reference signal.

In a possible implementation, when the apparatus 700 is configured to perform the method performed by the first communication apparatus in the FIG. 7 and related embodiments, the apparatus 700 includes a processing unit 701 and a transceiver unit 702. The processing unit 701 is configured to determine K reference signals corresponding to a first reference signal, where the first reference signal is for determining first channel information, and the first reference signal is carried on a first time domain resource. The transceiver unit 702 is further configured to receive a second reference signal, where the second reference signal is carried on a second time domain resource. The transceiver unit 702 is further configured to send third channel information, where the third channel information is obtained based on the second reference signal, the third channel information is carried on a third time domain resource, and the third channel information and the first channel information are for determining channel information between the first communication apparatus and a second communication apparatus, where the first time-frequency resource satisfies at least one of the following: a time interval between the first time domain resource and the second time domain resource is less than or equal to X time units, where X is a positive integer; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

In a possible implementation, when the apparatus 700 is configured to perform the method performed by the second communication apparatus in the FIG. 7 and related embodiments, the apparatus 700 includes a processing unit 701 and a transceiver unit 702. The transceiver unit 702 is configured to receive a first reference signal, where the first reference signal is for determining first channel information, and the first reference signal is carried on a first time domain resource. The processing unit 701 is configured to determine a second reference signal. The transceiver unit 702 is further configured to send the second reference signal, where the second reference signal is carried on a second time domain resource. The transceiver unit 702 is further configured to receive third channel information, where the third channel information is obtained based on the second reference signal, the third channel information is carried on a third time domain resource, and the third channel information and the first channel information are for determining channel information between a first communication apparatus and the second communication apparatus, where the first time-frequency resource satisfies at least one of the following: a time interval between the first time domain resource and the second time domain resource is less than or equal to X time units, where X is a positive integer; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

It should be noted that for details of content such as an information execution process of the unit of the communication apparatus 700, refer to descriptions in the foregoing method embodiments of this application. Details are not described herein again.

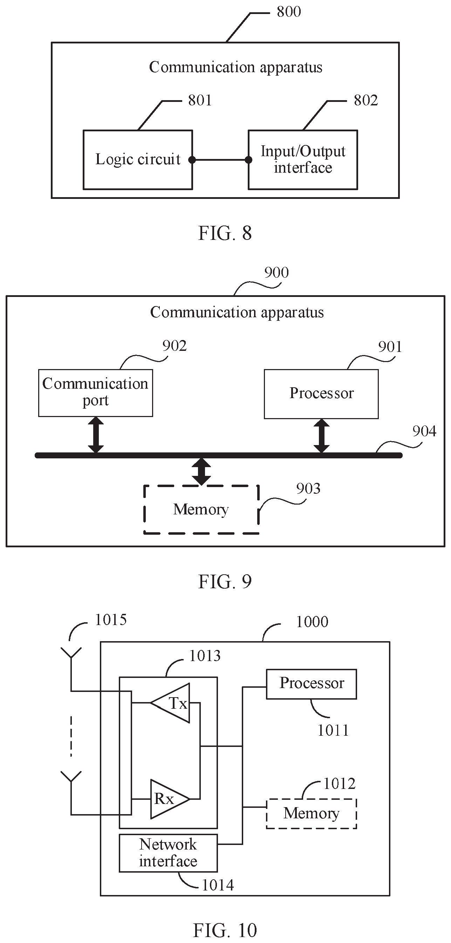

FIG. 8 is another diagram of a structure of a communication apparatus 800 according to this application. The communication apparatus 800 includes an input/output interface 802 and a logic circuit 801. The communication apparatus 800 may be a chip or an integrated circuit.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the logic circuit 801 is configured to determine K reference signal ports corresponding to a first reference signal, where K is a positive integer, the first reference signal is for determining first channel information, the first channel information is channel information corresponding to K ports in N ports of a first communication apparatus, the first channel information is for determining second channel information, the second channel information is channel information corresponding to the N ports, N is a positive integer greater than K, and the K reference signal ports satisfy one or more of the following: the K reference signal ports correspond to K rows, K columns, or K indexes in a spatial domain basis of the first communication apparatus; the K reference signal ports correspond to K antenna indexes in N antenna indexes, where the N antenna indexes are associated with the N ports; and the K reference signal ports correspond to indexes of channel information of the K ports in channel information of the N ports included in third channel information, where the third channel information is obtained based on a second reference signal. The input/output interface 802 is configured to send the first reference signal.

Optionally, the input/output interface 802 is configured to receive a first reference signal, where the first reference signal corresponds to K reference signal ports, and K is a positive integer. The logic circuit 801 is configured to determine first channel information based on the first reference signal, where the first channel information is channel information corresponding to K ports in N ports of a first communication apparatus, the first channel information is for determining second channel information, the second channel information is channel information corresponding to the N ports, N is a positive integer greater than K, and the K reference signal ports satisfy one or more of the following: the K reference signal ports correspond to K rows, K columns, or K indexes in a spatial domain basis of the first communication apparatus; the K reference signal ports correspond to K antenna indexes in N antenna indexes, where the N antenna indexes are associated with the N ports; and the K reference signal ports correspond to indexes of channel information of the K ports in channel information of the N ports included in third channel information, where the third channel information is obtained based on a second reference signal.

Optionally, the logic circuit 801 is configured to determine K reference signal ports corresponding to a first reference signal, where the first reference signal is for determining first channel information, and the first reference signal is carried on a first time domain resource. The input/output interface 802 is further configured to receive a second reference signal, where the second reference signal is carried on a second time domain resource. The input/output interface 802 is further configured to send third channel information, where the third channel information is obtained based on the second reference signal, the third channel information is carried on a third time domain resource, and the third channel information and the first channel information are for determining channel information between a first communication apparatus and a second communication apparatus, where the first time-frequency resource satisfies at least one of the following: a time interval between the first time domain resource and the second time domain resource is less than or equal to X time units, where X is a positive integer; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

Optionally, the input/output interface 802 is configured to receive a first reference signal, where the first reference signal is for determining first channel information, and the first reference signal is carried on a first time domain resource. The logic circuit 801 is configured to determine a second reference signal. The input/output interface 802 is further configured to send a second reference signal, where the second reference signal is carried on a second time domain resource. The input/output interface 802 is further configured to receive third channel information, where the third channel information is obtained based on the second reference signal, the third channel information is carried on a third time domain resource, and the third channel information and the first channel information are for determining channel information between a first communication apparatus and a second communication apparatus, where the first time-frequency resource satisfies at least one of the following: a time interval between the first time domain resource and the second time domain resource is less than or equal to X time units, where X is a positive integer; a time interval between the first time domain resource and the third time domain resource is less than or equal to Y time units, where Y is a positive number; the first time domain resource and the second time domain resource are located in a same time unit; and the first time domain resource and the third time domain resource are located in a same time unit.

The logic circuit 801 and the input/output interface 802 may further perform other steps performed by the first communication apparatus or the second communication apparatus in any embodiment, and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and some or all functions of the processing apparatus may be implemented by software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), systems on chips (system on chip, SoC), central processing units (central processing unit, CPU), network processors (network processor, NP), digital signal processors (digital signal processor, DSP), microcontroller units (microcontroller unit, MCU), programmable logic devices (programmable logic device, PLD), or other integrated chips, or any combination of the foregoing chips or processors.

FIG. 9 shows a communication apparatus 900 in the foregoing embodiments according to an embodiment of this application. The communication apparatus 900 may be specifically the communication apparatus used as the terminal device in the foregoing embodiments.

In a possible diagram of a logical structure of the communication apparatus 900, the communication apparatus 900 may include but is not limited to at least one processor 901 and a communication port 902.

The transceiver unit 702 shown in FIG. 7 may be a communication interface, the communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

Further, optionally, the apparatus may include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 900 shown in FIG. 9 may be specifically configured to implement the steps implemented by the terminal device in the foregoing method embodiments, and achieve the technical effects corresponding to the terminal device. For a specific implementation of the communication apparatus shown in FIG. 9, refer to the descriptions in the foregoing method embodiments. Details are not described herein again.

FIG. 10 is a diagram of a structure of a communication apparatus 1000 in the foregoing embodiments according to an embodiment of this application. The communication apparatus 1000 may be specifically a communication apparatus used as the network device in the foregoing embodiments. For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, and the transceiver 1013 are connected to the network interface 1014, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 702 shown in FIG. 7 may be a communication interface, the communication interface may be the network interface 1014 in FIG. 10, and the network interface 1014 may include an input interface and an output interface. Alternatively, the network interface 1014 may be a transceiver circuit, and the transceiver circuit may include an input interface circuit and an output interface circuit.

The processor 1011 is mainly configured to process a communication protocol and communication data, control the entire communication apparatus, execute a software program, and process data of the software program, for example, configured to support the communication apparatus in performing the actions in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1011 in FIG. 10. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1012 may be independent, and connected to the processor 1011. Optionally, the memory 1012 and the processor 1011 may be integrated together, for example, integrated in a chip. The memory 1012 can store program code for executing technical solutions of embodiments of this application, and execution of the program code is controlled by the processor 1011. Various types of computer program code executed may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal.

The receiver Rx of the transceiver 1013 is configured to receive the radio frequency signal from the antenna, convert the radio frequency signal into a digital baseband signal or a digital intermediate frequency signal, and provide the digital baseband signal or the digital intermediate frequency signal for the processor 1011, so that the processor 1011 further processes, for example, performs demodulation processing and decoding processing on, the digital baseband signal or the digital intermediate frequency signal. In addition, the transmitter Tx of the transceiver 1013 is further configured to receive a modulated digital baseband signal or digital intermediate frequency signal from the processor 1011, convert the modulated digital baseband signal or digital intermediate frequency signal into a radio frequency signal, and send the radio frequency signal through the one or more antennas 1015. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 1013 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver machine, an input interface, a receiver circuit, or the like. The sending unit may be referred to as a transmitter machine, a transmitter, a transmitter circuit, or the like.

It should be noted that the communication apparatus 1000 shown in FIG. 10 may be specifically configured to implement the steps implemented by the network device in the foregoing method embodiments, and achieve the technical effects corresponding to the network device. For a specific implementation of the communication apparatus 1000 shown in FIG. 10, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the possible implementations of the terminal device or the network device.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the terminal device or the network device in the foregoing method embodiments.

An embodiment of this application further provides a communication system. The communication system includes the terminal device in any one of the foregoing embodiments and a first network device, the communication system includes the terminal device in any one of the foregoing embodiments and a second network device, or the communication system includes the terminal device in any one of the foregoing embodiments, a first network device, and a second network device.

In the several embodiments provided in this application, it should be understood that the disclosed system, apparatus, and method may be implemented in other manners. For example, the apparatus embodiments described above are merely schematic. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:
   determining K reference signal ports corresponding to a first reference signal, wherein K is a positive integer, the first reference signal is for determining first channel information, the first channel information is channel information corresponding to K ports in N ports of a first communication apparatus, the first channel information is for determining second channel information, the second channel information is channel information corresponding to the N ports, N is a positive integer greater than K, and the K reference signal ports satisfy one or more of the following:

the K reference signal ports correspond to K rows, K columns, or K indexes in a spatial domain basis of the first communication apparatus; the K reference signal ports correspond to K antenna indexes in N antenna indexes, wherein the N antenna indexes are associated with the N ports; and
the K reference signal ports correspond to indexes of channel information of the K ports in channel information of the N ports comprised in third channel information, wherein the third channel information is obtained based on a second reference signal; and
sending the first reference signal.

2. The method according to claim 1, wherein the spatial domain basis comprises a discrete Fourier transform DFT basis and/or an eigenbasis.

3. The method according to claim 1 or 2, wherein the method further comprises:
sending or receiving first indication information, wherein the first indication information indicates the one or more items.

4. The method according to claim 1 or 2, wherein the one or more items are preconfigured or predefined.

5. The method according to any one of claims 1 to 4, wherein a value of N is a total quantity of physical antennas of the first communication apparatus, a total quantity of physical ports of the first communication apparatus, a total quantity of virtual ports of the first communication apparatus, or a quantity of ports indicated by first capability information, wherein the first capability information indicates a quantity of ports of the first communication apparatus.

6. The method according to any one of claims 1 to 5, wherein the second reference signal corresponds to P reference signal ports, wherein P is a positive integer; and the method further comprises:
sending the third channel information, wherein the third channel information is channel information corresponding to P ports in M ports, the third channel information is for determining the second channel information, the second channel information is channel information corresponding to the N ports and the M ports, and M is a positive integer greater than P.

7. The method according to claim 6, wherein the P reference signal ports correspond to indexes of the P ports in the M ports.

8. The method according to claim 6 or 7, wherein the method further comprises:
receiving or sending second indication information, wherein the second indication information indicates the indexes of the P ports in the M ports.

9. The method according to any one of claims 6 to 8, wherein a value of M is a total quantity of physical antennas, a total quantity of physical ports, or a total quantity of virtual ports of a second communication apparatus, or a quantity of ports indicated by second capability information, wherein the second capability information indicates a quantity of ports of the second communication apparatus.

10. The method according to any one of claims 6 to 9, wherein the first reference signal is carried on a first time domain resource, the second reference signal is carried on a second time domain resource, and the third channel information is carried on a third time domain resource, wherein
the first time-frequency resource satisfies at least one of the following:

a time interval between the first time domain resource and the second time domain resource is less than or equal to X time units, wherein X is a positive number;
a time interval between the first time domain resource and the third time domain resource is less than or equal to Y time units, wherein Y is a positive number;
the first time domain resource and the second time domain resource are located in a same time unit; and
the first time domain resource and the third time domain resource are located in a same time unit.

11. The method according to any one of claims 6 to 10, wherein

the second reference signal is a channel state information reference signal CSI-RS, the first reference signal is a sounding reference signal SRS, and the third channel information and the third channel information comprise a precoding matrix indicator PMI; or
the second reference signal is an SRS, the first reference signal is a CSI-RS, and the third channel information and the third channel information comprise a transmitted precoding matrix indicator T-PMI.

**12.** A communication method, comprising:

receiving a first reference signal, wherein the first reference signal corresponds to K reference signal ports, and K is a positive integer; and determining first channel information based on the first reference signal, wherein the first channel information is channel information corresponding to K ports in N ports of a first communication apparatus, the first channel information is for determining second channel information, the second channel information is channel information corresponding to the N ports, N is a positive integer greater than K, and the K reference signal ports satisfy one or more of the following:

the K reference signal ports correspond to K rows, K columns, or K indexes in a spatial domain basis of the first communication apparatus;
the K reference signal ports correspond to K antenna indexes in N antenna indexes, wherein the N antenna indexes are associated with the N ports; and
the K reference signal ports correspond to indexes of channel information of the K ports in channel information of the N ports comprised in third channel information, wherein the third channel information is obtained based on a second reference signal.

**13.** The method according to claim 12, wherein the spatial domain basis comprises a discrete Fourier transform DFT basis and/or an eigenbasis.

**14.** The method according to claim 12 or 13, wherein the method further comprises:
sending or receiving first indication information, wherein the first indication information indicates the one or more items.

**15.** The method according to claim 12 or 13, wherein the one or more items are preconfigured or predefined.

**16.** The method according to any one of claims 12 to 15, wherein a value of N is a total quantity of physical antennas of the first communication apparatus, a total quantity of physical ports of the first communication apparatus, a total quantity of virtual ports of the first communication apparatus, or a quantity of ports indicated by first capability information, wherein the first capability information indicates a quantity of ports of the first communication apparatus.

**17.** The method according to any one of claims 12 to 16, wherein the second reference signal corresponds to P reference signal ports, wherein P is a positive integer; and the method further comprises:
receiving the third channel information, wherein the third channel information is channel information corresponding to P ports in M ports, the third channel information is for determining the second channel information, the second channel information is channel information corresponding to the N ports and the M ports, and M is a positive integer greater than P.

**18.** The method according to claim 17, wherein the P reference signal ports correspond to indexes of the P ports in the M ports.

**19.** The method according to claim 17 or 18, wherein the method further comprises:
receiving or sending second indication information, wherein the second indication information indicates the indexes of the P ports in the M ports.

**20.** The method according to any one of claims 17 to 19, wherein a value of M is a total quantity of physical antennas, a total quantity of physical ports, or a total quantity of virtual ports of a second communication apparatus, or a quantity of ports indicated by second capability information, wherein the second capability information indicates a quantity of ports of the second communication apparatus.

**21.** The method according to any one of claims 17 to 20, wherein the second reference signal is carried on a first time domain resource, the third channel information is carried on a second time domain resource, and the first reference signal is carried on a third time domain resource, wherein
the first time-frequency resource satisfies at least one of the following:

a time interval between the first time domain resource and the third time domain resource is less than or equal to X time units, wherein X is a positive number;
a time interval between the second time domain resource and the third time domain resource is less than or equal to Y time units, wherein Y is a positive number;
the first time domain resource and the third time domain resource are located in a same time unit; and
the second time domain resource and the third time domain resource are located in a same time unit.

**22.** The method according to any one of claims 17 to 21, wherein

the second reference signal is a channel state information reference signal CSI-RS, the first reference signal is a sounding reference signal SRS, and the third channel information and the third channel information comprise a precoding matrix indicator PMI; or
the second reference signal is an SRS, the first reference signal is a CSI-RS, and the third channel information and the third channel information comprise a transmitted precoding matrix indicator T-PMI.

23. A communication method, comprising:

sending a first reference signal, wherein the first reference signal is for determining first channel information, and the first reference signal is carried on a first time domain resource;
receiving a second reference signal, wherein the second reference signal is carried on a second time domain resource; and
sending third channel information, wherein the third channel information is obtained based on the second reference signal, the third channel information is carried on a third time domain resource, and the third channel information and the first channel information are for determining channel information between a first communication apparatus and a second communication apparatus, wherein
the first time-frequency resource satisfies at least one of the following:

a time interval between the first time domain resource and the second time domain resource is less than or equal to X time units, wherein X is a positive integer;
a time interval between the first time domain resource and the third time domain resource is less than or equal to Y time units, wherein Y is a positive number;
the first time domain resource and the second time domain resource are located in a same time unit; and
the first time domain resource and the third time domain resource are located in a same time unit.

24. The method according to claim 23, wherein

the second reference signal is a channel state information reference signal CSI-RS, the first reference signal is a sounding reference signal SRS, and the third channel information comprises a precoding matrix indicator PMI; or
the second reference signal comprises an SRS, the first reference signal is a CSI-RS, and the third channel information comprises a transmitted precoding matrix indicator T-PMI.

25. A communication method, comprising:

receiving a first reference signal, wherein the first reference signal is for determining first channel information, and the first reference signal is carried on a first time domain resource;
sending a second reference signal, wherein the second reference signal is carried on a second time domain resource; and
receiving third channel information, wherein the third channel information is obtained based on the second reference signal, the third channel information is carried on a third time domain resource, and the third channel information and the first channel information are for determining channel information between a first communication apparatus and a second communication apparatus, wherein
the first time-frequency resource satisfies at least one of the following:

a time interval between the first time domain resource and the second time domain resource is less than or equal to X time units, wherein X is a positive integer;
a time interval between the first time domain resource and the third time domain resource is less than or equal to Y time units, wherein Y is a positive number;
the first time domain resource and the second time domain resource are located in a same time unit; and
the first time domain resource and the third time domain resource are located in a same time unit.

26. The method according to claim 25, wherein

the second reference signal is a channel state information reference signal CSI-RS, the first reference signal is a sounding reference signal SRS, and the third channel information comprises a precoding matrix indicator PMI; or
the second reference signal comprises an SRS, the first reference signal is a CSI-RS, and the third channel information comprises a transmitted precoding matrix indicator T-PMI.

27. A communication apparatus, comprising a module configured to perform the method according to any one of claims 1 to 26.

28. A communication apparatus, comprising at least one processor, wherein the at least one processor is coupled to a memory, and the at least one processor is configured to perform the method according to any one of claims 1 to 26.

29. A computer-readable storage medium, wherein the storage medium stores a computer program or instructions; and when the computer program or the instructions are executed by a communication apparatus, the method according to any one of claims 1 to 26 is implemented.

FIG. 1

EP 4 757 226 A1

Scatterer 1

$N_T=512+$

Scatterer L

$N_R=16+$

Network device

Terminal device

FIG. 2

First communication apparatus

Second communication apparatus

S301: First reference signal

S302: Determine first channel information based on the first reference signal

FIG. 3

FIG. 4a

FIG. 4b

FIG. 5

First communication apparatus

Second communication apparatus

S601: First reference signal

S602: Second reference signal

S603: Third channel information

FIG. 6

700

Communication apparatus

701

Processing unit

702

Transceiver unit

FIG. 7

800

Communication apparatus

801

Logic circuit

802

Input/Output interface

FIG. 8

900

Communication apparatus

902

Communication port

901

Processor

904

903

Memory

FIG. 9

1015

1000

1013

Tx

Processor

1011

1012

Rx

Memory

Network interface

1014

FIG. 10

## INTERNATIONAL SEARCH REPORT

| International application No. |
|---|
| **PCT/CN2024/110891** |

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC:H04L,H04B

Documentation searched other than minimum documentation to the extent that such documents are included in the fields searched

Electronic data base consulted during the international search (name of data base and, where practicable, search terms used)

CNTXT, CNKI, VCN, DWPI, ENTXT, 3GPP: 参考信号, 端口, 信道信息, 部分, 空域基底, 空域向量, DFT基底, 特征基底, 索引, 天线, 关联, 对应, 时域资源, 时间单元, 帧, 时隙, 符号, 间隔, 小于, 不大于, 不超过, 等于, CSI-RS, SRS, port, channel, part, spatial domain basis, index, antenna, associated, corresponding, resource, time unit, interval

**C. DOCUMENTS CONSIDERED TO BE RELEVANT**

| Category* | Citation of document, with indication, where appropriate, of the relevant passages | Relevant to claim No. |
|---|---|---|
| A | WO 2020010506 A1 (HUAWEI TECHNOLOGIES CO., LTD.) 16 January 2020 (2020-01-16) <br> description, page 1, lines 12-34, page 15, line 2-page 38, line 16, and figures 1-7 | 1-29 |
| A | CN 109150467 A (HUAWEI TECHNOLOGIES CO., LTD.) 04 January 2019 (2019-01-04) <br> entire document | 1-29 |
| A | CN 110798894 A (ZTE CORP.) 14 February 2020 (2020-02-14) <br> entire document | 1-29 |
| A | CN 114826444 A (MEDIATEK SINGAPORE PTE. LTD.) 29 July 2022 (2022-07-29) <br> entire document | 1-29 |
| A | US 2022159580 A1 (SAMSUNG ELECTRONICS CO., LTD.) 19 May 2022 (2022-05-19) <br> entire document | 1-29 |
| A | WO 2023030291 A1 (HUAWEI TECHNOLOGIES CO., LTD.) 09 March 2023 (2023-03-09) <br> entire document | 1-29 |

☐ Further documents are listed in the continuation of Box C.　　☑ See patent family annex.

| | |
|---|---|
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 November 2024** | **18 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

EP 4 757 226 A1

INTERNATIONAL SEARCH REPORT
Information on patent family members

International application No.

**PCT/CN2024/110891**

| Patent document cited in search report | | | Publication date (day/month/year) | Patent family member(s) | | | Publication date (day/month/year) |
|---|---|---|---|---|---|---|---|
| WO | 2020010506 | A1 | 16 January 2020 | US | 2021135726 | A1 | 06 May 2021 |
| | | | | EP | 3800819 | A1 | 07 April 2021 |
| | | | | CN | 112368968 | A | 12 February 2021 |
| | | | | IN | 202137000095 | A | 12 February 2021 |
| CN | 109150467 | A | 04 January 2019 | WO | 2018228563 | A1 | 20 December 2018 |
| | | | | US | 2019373602 | A1 | 05 December 2019 |
| | | | | EP | 3565170 | A1 | 06 November 2019 |
| | | | | IN | 201937030984 | A | 20 December 2019 |
| CN | 110798894 | A | 14 February 2020 | EP | 4040891 | A1 | 10 August 2022 |
| | | | | US | 2022386295 | A1 | 01 December 2022 |
| | | | | CA | 3153178 | A1 | 08 April 2021 |
| | | | | TW | 202429940 | A | 16 July 2024 |
| | | | | TW | 202116102 | A | 16 April 2021 |
| | | | | WO | 2021063296 | A1 | 08 April 2021 |
| | | | | IN | 202217024462 | A | 05 August 2022 |
| CN | 114826444 | A | 29 July 2022 | TW | 202232909 | A | 16 August 2022 |
| | | | | US | 2022231740 | A1 | 21 July 2022 |
| US | 2022159580 | A1 | 19 May 2022 | KR | 20210130771 | A | 01 November 2021 |
| | | | | EP | 3878231 | A1 | 15 September 2021 |
| | | | | WO | 2020190098 | A1 | 24 September 2020 |
| | | | | CN | 111726209 | A | 29 September 2020 |
| | | | | CN | 111836252 | A | 27 October 2020 |
| | | | | CN | 111836349 | A | 27 October 2020 |
| | | | | IN | 202117042717 | A | 31 December 2021 |
| WO | 2023030291 | A1 | 09 March 2023 | CN | 115765942 | A | 07 March 2023 |

Form PCT/ISA/210 (patent family annex) (July 2022)

43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311096172